# EUROPEAN PATENT APPLICATION

(11) **EP 4 742 557 A1**
(43) Date of publication of application: **13.05.2026**
(21) Application number: 23951701.4
(22) Date of filing: 11.09.2023
(51) Int. Cl.: H04B 7/185

(54) **COMMUNICATION METHOD AND RELATED DEVICE**

(71) Applicant: Huawei Technologies Co., Ltd., Shenzhen, Guangdong 518129 (CN)
(72) Inventor: LUO, Hejia, Shenzhen, Guangdong 518129 (CN); WANG, Xiaolu, Shenzhen, Guangdong 518129 (CN); KONG, Chuili, Shenzhen, Guangdong 518129 (CN); LI, Kexin, Shenzhen, Guangdong 518129 (CN); WANG, Jun, Shenzhen, Guangdong 518129 (CN)
(74) Representative: MERH-IP Matias Erny Reichl Hoffmann Patentanwälte PartG mbB
(86) International application number: PCT/CN2023/117950
(87) International publication number: WO 2025/054751

(57) **Abstract**

A communication method and a related device are provided, to indicate an orbital region in which a network device performs communication, so that a terminal device can perform communication when the network device is located in an orbital region in which the network device expects to perform communication. This can prevent the terminal device from performing communication when the network device is located in an orbital region other than the orbital region in which the network device expects to perform communication, and can reduce a possibility of communication interference between signals of different network devices, thereby improving communication efficiency. In the method, the terminal device receives first information, where the first information indicates an orbital region in which a first network device performs communication; and when it is determined that a position of the first network device is located in the orbital region, the terminal device sends second information, where the second information is associated with the first network device.

## Description

### TECHNICAL FIELD

This application relates to the communication field, and in particular, to a communication method and a related device.

### BACKGROUND

In a communication system, a signal (for example, the signal carries configuration information, configuration signaling, or the like) that can be sent by a network device may be used to configure communication resources. The communication resources may include communication resources of the network device and communication resources of a possible neighboring network device, so that a receiver of the signal can determine a corresponding communication resource based on the signal. For example, when the receiver of the signal is a terminal device, the terminal device can obtain a network service based on the communication resource.

Generally, assuming that the network device is a terrestrial base station, the terrestrial base station and another neighboring terrestrial base station are generally fixed at places on the ground, that is, relative positions between different terrestrial base stations are generally unchanged. Therefore, network management personnel may perform network planning in advance, so that communication resources (for example, the communication resources may include time domain resources and frequency domain resources) indicated by different signals sent by different terrestrial base stations for a same communication region can be different, to reduce communication interference for the terminal device in the same communication region.

However, the network device may not be fixed at a place on the ground. For example, the network device may be a device such as a low earth orbit satellite, a medium earth orbit satellite, or a high earth orbit satellite. In this case, because the network device itself moves at a high speed, a position of the network device may change frequently. As a result, communication resources indicated by different signals sent by different network devices for a same communication region may be the same. Consequently, a possibility of communication interference is increased, and communication efficiency is affected.

### SUMMARY

This application provides a communication method and a related device, to indicate an orbital region in which a network device performs communication, so that a terminal device can perform communication when the network device is located in an orbital region in which the network device expects to perform communication. This can prevent the terminal device from performing communication when the network device is located in an orbital region other than the orbital region in which the network device expects to perform communication, and can reduce a possibility of communication interference between signals of different network devices, thereby improving communication efficiency.

A first aspect of this application provides a communication method. The method is performed by a terminal device, or the method is performed by some components (for example, a processor, a chip, or a chip system) in the terminal device, or the method may be implemented by a logical module or software that can implement all or some functions of the terminal device. In the first aspect and possible implementations of the first aspect, an example in which the method is performed by the terminal device is used for description. In the method, the terminal device receives first information, where the first information indicates an orbital region in which a first network device performs communication; and when it is determined that a position of the first network device is located in the orbital region, the terminal device sends second information, where the second information is associated with the first network device.

Based on the foregoing technical solution, the first information received by the terminal device indicates the orbital region in which the first network device performs communication. Then, when the terminal device determines that the position of the first network device is located in the orbital region, the terminal device sends the second information associated with the first network device. In other words, after the terminal device determines, based on the received first information, the orbital region in which the network device performs communication, and when it is determined that the position of the network device is located in the orbital region, the terminal device determines that communication with the network device can be initiated. In this way, the orbital region in which the network device performs communication is indicated, so that the terminal device can perform communication when the network device is located in an orbital region in which the network device expects to perform communication. This can prevent the terminal device from performing communication when the network device is located in an orbital region other than the orbital region in which the network device expects to perform communication, and can reduce a possibility of communication interference between signals of different network devices, thereby improving communication efficiency.

In addition, for the terminal device, the orbital region in which the network device performs communication may correspond to an angle interval within which the terminal device performs communication. In other words, the terminal device may determine, by using the orbital region of the network device, an angle interval within which the network device can perform communication (for example, the terminal device may communicate with the network device by using a communication beam (beam) within the angle interval). Correspondingly, in the foregoing technical solution, the orbital region in which the network device performs communication is indicated, so that the terminal device can perform communication based on an expected communication angle interval indicated by the network device.

It should be understood that the orbital region in which the first network device performs communication may be understood as an orbital region in which, when the position of the first network device is located in the orbital region, the first network device has a communication capability. Therefore, the orbital region in which the first network device performs communication may be replaced with an orbital region in which the first network device can perform communication, an orbital region in which the first network device is allowed to perform communication, or the like.

Optionally, orbital regions in which one or more network devices located on a same orbit perform communication may be the same. In the foregoing technical solution, the first network device may be one of the one or more network devices, or the first network device may be the one or more network devices. In other words, the first information may indicate the orbital region in which the one or more network devices on the orbit of the first network device perform communication. Therefore, when the terminal device determines that a position of any one of the one or more network devices on the orbit of the first network device is located in the orbital region, the terminal device may determine that the terminal device can communicate with the network device on the orbit of the first network device, and then send the second information associated with the first network device.

Optionally, orbital regions in which different network devices located on different orbits perform communication may be different. For example, orbital regions in which different network devices located on different orbits perform communication may be completely different (that is, completely non-overlapping), or orbital regions in which different network devices located on different orbits perform communication may partially overlap. Correspondingly, for the terminal device, angle intervals within which different network devices located on different orbits perform communication are different. Therefore, the terminal device can communicate with network devices on different orbits by using different communication angle intervals, and when different network devices on different orbits use a same communication resource, interference can also be reduced.

Optionally, the first information may be information sent in a broadcast manner. For example, the first information may include a synchronization signal block (synchronization signal/physical broadcast channel block, SS/PBCH block, SS/PBCH block, or SSB) or a system information block (system information block, SIB).

It should be understood that when the first network device is a satellite, an orbit of the satellite may be a closed curve formed by movement of the satellite around the Earth along an approximately circular or elliptical path. Due to rotation of the Earth, an orbit of a satellite sweeps over the Earth to form a curved surface (or an approximately curved surface). An orbital region in which the satellite performs communication may be greater than or equal to the curved surface, and a moving speed of the satellite is generally greater than a moving speed of the terminal device. Therefore, during movement of the satellite, when the curved surface covers the terminal device or a position of the terminal device is located in a region in which the curved surface is projected on the ground, the satellite can communicate with the terminal device or communication quality between the satellite and the terminal device is relatively good. Conversely, when the curved surface does not cover the terminal device or the position of the terminal device is located outside the region in which the curved surface is projected on the ground, the satellite may be unable to communicate with the terminal device or communication quality between the satellite and the terminal device is relatively poor. Correspondingly, in the foregoing technical solution, the orbital region in which the first network device performs communication may be understood as the curved-surface region, or a region in which the curved-surface region is projected on the ground, or a three-dimensional spatial region between the curved-surface region and the projection.

In a possible implementation of the first aspect, the orbital region includes an inter-orbit position interval range.

Based on the foregoing technical solution, the curved surface formed by the orbital region in which the first network device performs communication may be represented by an inter-orbit position interval in a tangential direction of an orbital movement direction. Correspondingly, the orbital region indicated by the first information may include an inter-orbit position interval range. To be specific, the terminal device may determine, based on the first information, an inter-orbit position interval range within which the first network device performs communication, and the terminal device may subsequently determine, based on the position of the first network device and the inter-orbit position interval range, whether the position of the first network device is located in the orbital region.

Optionally, the inter-orbit position interval range includes a position interval start point and a position interval end point, and the first information includes an offset of a right ascension of an ascending node of the orbit corresponding to the position interval start point at a reference moment relative to a reference point angle, and/or an offset of a right ascension of an ascending node of the orbit corresponding to the position interval end point at the reference moment relative to the reference point angle.

For example, the reference point angle may include Greenwich longitude, 180° east longitude or 90° west longitude.

For example, the reference moment may include a current moment, a moment preset duration earlier than the current moment, or a moment preset duration later than the current moment.

Optionally, the reference point angle may be a reference point angle preconfigured in a standard or a protocol, or the network device may indicate the reference point angle to the terminal device through configuration. This is not limited herein.

Optionally, the first information may alternatively indicate the inter-orbit position interval range in another manner. For example, the first information carries position information (or an index of position information) of the position interval start point and/or the position interval end point. For example, the position information may be indicated by using longitude and latitude coordinates and a corresponding timestamp. For another example, the position information may be indicated by using longitude and latitude coordinates and an altitude.

In a possible implementation of the first aspect, the orbital region includes an intra-orbit angle interval range.

Based on the foregoing technical solution, the curved surface formed by the orbital region in which the first network device performs communication may be represented by an intra-orbit angle interval range in the orbital movement direction. Correspondingly, the orbital region indicated by the first information may include an intra-orbit angle interval range. To be specific, the terminal device may determine, based on the first information, an intra-orbit angle interval range within which the first network device performs communication, and the terminal device may subsequently determine, based on the position of the first network device and the intra-orbit angle interval range, whether the position of the first network device is located in the orbital region.

In a possible implementation of the first aspect, the intra-orbit angle interval includes an angle interval start point and an angle interval end point, and the first information includes an offset of the angle interval start point relative to a reference point, and/or an offset of the angle interval end point relative to the reference point.

Based on the foregoing technical solution, when the orbital region includes the intra-orbit angle interval range, the first information may include the offset of the angle interval start point and/or the angle interval end point relative to the reference point, so that the terminal device can determine an intra-orbit angle interval of the first network device based on the offset.

For example, the reference point may include the ascending node of the orbit, a descending node of the orbit, or a highest latitude position that the orbit passes through.

Optionally, the reference point may be a reference point preconfigured in a standard or a protocol, or the network device may indicate the reference point to the terminal device through configuration. This is not limited herein.

Optionally, the first information may alternatively indicate the intra-orbit angle interval range in another manner. For example, the first information carries position information (or an index of position information) of the interval start point and/or the interval end point. For example, the position information may be indicated by using longitude and latitude coordinates. For another example, the position information may be indicated by using longitude and latitude coordinates and an altitude.

In a possible implementation of the first aspect, the method further includes: The terminal device receives third information, where the third information indicates an effectiveness condition of the orbital region; and that the terminal device sends the second information when it is determined that the position of the first network device is located in the orbital region includes: The terminal device sends the second information when it is determined that the position of the first network device is located in the orbital region and that the effectiveness condition is met.

Based on the foregoing technical solution, the terminal device may further determine the effectiveness condition of the orbital region based on the received third information, and when it is determined that the position of the first network device is located in the orbital region and that the effectiveness condition is met, the terminal device determines that the terminal device can communicate with the first network device, and then sends the second information associated with the first network device.

Optionally, the third information and the first information are carried in a same message (for example, the first information includes the third information, or the third information includes the first information) or different messages. This is not limited herein.

Optionally, the terminal device may obtain the third information through pre-configuration or predefinition.

In a possible implementation of the first aspect, when it is determined that the effectiveness condition is not met, the method further includes: The terminal device sends fourth information, where the fourth information is used to request to update the first information.

Based on the foregoing technical solution, after the terminal device determines the effectiveness condition of the orbital region based on the received third information, and when the terminal device determines that the effectiveness condition is not met, the terminal device may further send the fourth information used to request to update the first information, so that the network device can subsequently send updated first information based on the request and update, by using the updated first information, the orbital region that is indicated by the first information and in which the first network device performs communication.

In a possible implementation of the first aspect, the effectiveness condition includes an effective time and/or an effective geographical location.

Based on the foregoing technical solution, the effectiveness condition indicated by the third information may include the effective time and/or the effective geographical location, so that the terminal device can determine, based on the current time and/or a current geographical location, whether the effectiveness condition is met. In addition, when the terminal device determines that the effectiveness condition is met, the terminal device sends the second information associated with the first network device, to increase a possibility that the second information is successfully received by the network device.

Optionally, when the effectiveness condition indicated by the third information includes the effective time, the third information may include one or more of an effective start time, effective duration, and an effective end time, or the third information may include an index value corresponding to one or more of an effective start time, effective duration, and an effective end time.

Optionally, when the effectiveness condition indicated by the third information includes the effective geographical location, the third information may include one or more of an absolute coordinate value of the geographical location, a relative coordinate value relative to a reference point, and indication information of a region relative to the reference point (for example, when the region is a circular region, the indication information may include a radius or a diameter of the circular region; or when the region is a rectangular region, the indication information may include a side length of the rectangle). Alternatively, the third information may include an index value corresponding to one or more of an absolute coordinate value of the geographical location, a relative coordinate value relative to a reference point, and indication information of a region relative to the reference point.

In a possible implementation of the first aspect, that the terminal device sends the second information includes: The terminal device sends the second information to the first network device, where the second information includes at least one of the following: cell measurement information of the terminal device with respect to the first network device, initial access information for accessing the first network device, handover-related access information for accessing the first network device, and uplink data of the terminal device.

Based on the foregoing technical solution, when the terminal device determines that the position of the first network device is located in the orbital region, the terminal device may determine that the terminal device can communicate with the first network device, and then the terminal device may send at least one piece of the foregoing information to the first network device, so that the terminal device performs at least one of measurement, initial access, handover-related access, and data transmission with respect to the first network device.

For example, the cell measurement information of the terminal device with respect to the first network device may indicate a result of measuring, by the terminal device, a signal of a cell of the first network device. For example, the signal of the cell may include an SSB or a channel state information reference signal (channel state information reference signal, CSI-RS). The measurement result of the signal of the cell may include a received signal strength indicator (received signal strength indication, RSSI) value, reference signal received power (reference signal received power, RSRP), reference signal received quality (reference signal received quality, RSRQ), or the like.

For example, the initial access information for accessing the first network device may include a random access preamble (random access preamble), a message 1 (message 1, MSG1), or a message A (message A, MSGA).

For example, the handover-related access information for accessing the first network device may include a preamble.

For example, the uplink data of the terminal device may include data or control information sent on a physical uplink shared channel (physical uplink shared channel, PUSCH) or a physical uplink control channel (physical uplink control channel, PUCCH).

In a possible implementation of the first aspect, that the terminal device sends the second information includes: The terminal device sends the second information to a second network device, where the second information includes at least one of the following: cell measurement information of the terminal device with respect to the first network device, handover-related access information for accessing the first network device, and uplink data of the terminal device.

Based on the foregoing technical solution, when the terminal device determines that the position of the first network device is located in the orbital region, the terminal device may determine that the terminal device can communicate with the first network device, and then the terminal device may send at least one piece of the foregoing information to the second network device, so that the terminal device performs at least one of measurement, handover-related access, and data transmission with respect to the first network device.

Optionally, the second network device may be a neighboring network device of the first network device, so that the terminal device can implement, by performing the process of sending the second information, at least one of the following processes: measuring the cell of the first network device, initiating handover-related access to the first network device, and initiating data transmission to the first network device. The first network device and the second network device may be network devices located on a same orbit (that is, network devices in a same system), or may be network devices located on different orbits (that is, network devices in different systems). This is not limited herein.

In a possible implementation of the first aspect, the method further includes: The terminal device receives fifth information, where the fifth information is used to determine the position of the first network device.

Based on the foregoing technical solution, the terminal device may further receive the fifth information, so that the terminal device can determine the position of the first network device based on the fifth information and can subsequently determine, based on the position of the first network device and the orbital region in which the first network device performs communication, whether to communicate with the first network device.

Optionally, the terminal device may determine the position of the first network device through pre-configuration.

In a possible implementation of the first aspect, the method further includes: The terminal device sends sixth information, where the sixth information indicates the inter-orbit position interval range and/or the intra-orbit angle interval range within which the network device performs communication (or can perform communication). Therefore, the network device can use the sixth information sent by the terminal device as one of bases for determining the orbital region indicated by the first information, so that the network device can communicate with the terminal device within an inter-orbit position interval range and/or an intra-orbit angle interval range within which the terminal device expects to perform communication.

A second aspect of this application provides a communication method. The method is performed by a network device, or the method is performed by some components (for example, a processor, a chip, or a chip system) in the network device, or the method may be implemented by a logical module or software that can implement all or some functions of the network device. In the second aspect and possible implementations of the second aspect, an example in which the method is performed by the network device is used for description. The network device may be a first network device or a second network device described below. In the method, the network device determines first information, where the first information indicates an orbital region in which the first network device performs communication; and the network device sends the first information.

Based on the foregoing technical solution, the first information sent by the network device indicates the orbital region in which the first network device performs communications. Then, after a terminal device determines, based on the received first information, the orbital region in which the first network device performs communication, and when determining that a position of the first network device is located in the orbital region, the terminal device determines that communication with the first network device may be initiated (or the terminal device may camp on the first network device). In this way, the orbital region in which the network device performs communication is indicated, so that the terminal device can perform communication when the network device is located in an orbital region in which the network device expects to perform communication. This can prevent the terminal device from performing communication when the network device is located in an orbital region other than the orbital region in which the network device expects to perform communication, and can reduce a possibility of communication interference between signals of different network devices, thereby improving communication efficiency.

In addition, for the terminal device, the orbital region in which the network device performs communication may correspond to an angle interval within which the terminal device performs communication. In other words, the terminal device may determine, by using the orbital region of the network device, an angle interval within which the network device can perform communication (for example, the terminal device may communicate with the network device by using a communication beam (beam) within the angle interval). Correspondingly, in the foregoing technical solution, the orbital region in which the network device performs communication is indicated, so that the terminal device can perform communication based on an expected communication angle interval indicated by the network device.

It should be noted that the network device may determine the first information in a plurality of manners. For example, the network device may determine the first information through pre-configuration. Alternatively, the network device may obtain the first information through configuration by another network device (for example, a core network device or another access network device), or the network device determines the first information based on a detected/sensed signal of another device (for example, a terminal device or a network device) after detecting/sensing the signal of the another device. This is not limited herein.

In an implementation example, the network device may receive sixth information from the terminal device, where the sixth information indicates an inter-orbit position interval range and/or an intra-orbit angle interval range within which the network device performs communication (or can perform communication). Therefore, the network device can use the sixth information sent by the terminal device as one of bases for determining the orbital region indicated by the first information, so that the network device can communicate with the terminal device within an inter-orbit position interval range and/or an intra-orbit angle interval range within which the terminal device expects to perform communication.

In another implementation example, the network device may receive seventh information from another network device, where the seventh information indicates an inter-orbit position interval range and/or an intra-orbit angle interval range within which the network device performs communication (or can perform communication). Therefore, the network device can use the seventh information sent by the another network device as one of the bases for determining the orbital region indicated by the first information, so that the network device can communicate with the terminal device within an inter-orbit position interval range and/or intra-orbit angle interval range within which the another network device expects to perform communication, and mutual interference can be avoided through interaction between different network devices.

In a possible implementation of the second aspect, the orbital region includes an inter-orbit position interval range.

Based on the foregoing technical solution, the orbital region indicated by the first information may include an inter-orbit position interval range. To be specific, the terminal device may determine, based on the first information, an inter-orbit position interval range within which the first network device performs communication, and the terminal device may subsequently determine, based on the position of the first network device and the inter-orbit position interval range, whether the position of the first network device is located in the orbital region.

Optionally, the inter-orbit position interval range includes a position interval start point and a position interval end point, and the first information includes an offset of a right ascension of an ascending node of an orbit corresponding to the position interval start point at a reference moment relative to a reference point angle, and/or an offset of a right ascension of an ascending node of the orbit corresponding to the position interval end point at the reference moment relative to the reference point angle.

In a possible implementation of the second aspect, the orbital region includes an intra-orbit angle interval range.

Based on the foregoing technical solution, the orbital region indicated by the first information may include an intra-orbit angle interval range. To be specific, the terminal device may determine, based on the first information, an intra-orbit angle interval range within which the first network device performs communication, and the terminal device may subsequently determine, based on the position of the first network device and the intra-orbit angle interval range, whether the position of the first network device is located in the orbital region.

In a possible implementation of the second aspect, the intra-orbit angle interval includes an angle interval start point and an angle interval end point, and the first information includes an offset of the angle interval start point relative to a reference point, and/or an offset of the angle interval end point relative to the reference point.

Based on the foregoing technical solution, when the orbital region includes the intra-orbit angle interval range, the first information may include the offset of the angle interval start point and/or the angle interval end point relative to the reference point, so that the terminal device can determine an intra-orbit angle interval of the first network device based on the offset.

In a possible implementation of the second aspect, the method further includes: The network device receives second information when it is determined that the position of the first network device is located in the orbital region, where the second information is associated with the first network device.

Based on the foregoing technical solution, when the position of the first network device is located in the orbital region indicated by the first information, the terminal device may determine that the terminal device can communicate with the first network device, that is, the terminal device may send the second information associated with the first network device. Correspondingly, the network device may further receive the second information.

In a possible implementation of the second aspect, the method further includes: The network device sends third information, where the third information indicates an effectiveness condition of the orbital region; and that the network device receives the second information when it is determined that the position of the first network device is located in the orbital region includes: The network device receives the second information when it is determined that the position of the first network device is located in the orbital region and that the effectiveness condition is met.

Based on the foregoing technical solution, the network device may further send the third information, so that the terminal device determines the effectiveness condition of the orbital region based on the received third information. In addition, when it is determined that the position of the first network device is located in the orbital region and that the effectiveness condition is met, the terminal device determines that the terminal device can communicate with the first network device, and then sends the second information associated with the first network device.

In a possible implementation of the second aspect, the method further includes: The network device receives fourth information, where the fourth information is used to request to update the first information.

Based on the foregoing technical solution, after the network device sends the third information, and after the terminal device determines the effectiveness condition of the orbital region based on the received third information, the terminal device may further send the fourth information used to request to update the first information when the terminal device determines that the effectiveness condition is not met, so that the network device may subsequently send updated first information based on the request and update, by using the updated first information, the orbital region that is indicated by the first information and in which the first network device performs communication.

In a possible implementation of the second aspect, the effectiveness condition includes an effective time and/or an effective geographical location.

Based on the foregoing technical solution, the effectiveness condition indicated by the third information may include the effective time and/or the effective geographical location, so that the terminal device can determine, based on the current time and/or a current geographical location, whether the effectiveness condition is met. In addition, when the terminal device determines that the effectiveness condition is met, the terminal device sends the second information associated with the first network device, to increase a possibility that the second information is successfully received by the network device.

In a possible implementation of the second aspect, the method is applied to the first network device, and the second information includes at least one of the following: cell measurement information of the terminal device with respect to the first network device, initial access information for accessing the first network device, handover-related access information for accessing the first network device, and uplink data of the terminal device.

Based on the foregoing technical solution, when the terminal device determines that the position of the first network device is located in the orbital region, the terminal device may determine that the terminal device can communicate with the first network device, and then the terminal device may send at least one piece of the foregoing information to the first network device, so that the terminal device performs at least one of measurement, initial access, handover-related access, and data transmission with respect to the first network device.

In a possible implementation of the second aspect, the method is applied to the second network device, and the second information includes at least one of the following: cell measurement information of the terminal device with respect to the first network device, handover-related access information for accessing the first network device, and uplink data of the terminal device.

Based on the foregoing technical solution, when the terminal device determines that the position of the first network device is located in the orbital region, the terminal device may determine that the terminal device can communicate with the first network device, and then the terminal device may send at least one piece of the foregoing information to the second network device, so that the terminal device performs at least one of measurement, handover-related access, and data transmission with respect to the first network device.

In a possible implementation of the second aspect, the method further includes: The network device sends fifth information, where the fifth information is used to determine the position of the first network device.

Based on the foregoing technical solution, the network device may further send the fifth information, so that the terminal device can determine the position of the first network device based on the fifth information and can subsequently determine, based on the position of the first network device and the orbital region in which the first network device performs communication, whether to communicate with the first network device.

Optionally, the terminal device may determine the position of the first network device through pre-configuration.

A third aspect of this application provides a communication method. The method is performed by a terminal device, or the method is performed by some components (for example, a processor, a chip, or a chip system) in the terminal device, or the method may be implemented by a logical module or software that can implement all or some functions of the terminal device. In the third aspect and possible implementations of the third aspect, an example in which the method is performed by the terminal device is used for description. In the method, the terminal device receives first information, where the first information indicates an orbital region in which a first network device performs communication; and when it is determined that a position of the first network device is located in the orbital region, the terminal device camps (camp) on the first network device.

Based on the foregoing technical solution, the first information received by the terminal device indicates the orbital region in which the first network device performs communication. Then, when the terminal device determines that the position of the first network device is located in the orbital region, the terminal device may camp on the first network device. In other words, after the terminal device determines, based on the received first information, the orbital region in which the network device performs communication, and when it is determined that the position of the network device is located in the orbital region, the terminal device determines that the terminal device may camp on the first network device and communicate with the network device. In this way, the orbital region in which the network device performs communication is indicated, so that the terminal device can camp on the network device when the network device is located in an orbital region in which the network device expects to perform communication. This can prevent the terminal device from camping on the network device when the network device is located in an orbital region other than the orbital region in which the network device expects to perform communication, and can reduce a possibility of communication interference between signals of different network devices, thereby improving communication efficiency.

It should be understood that, that the terminal device camps (camp) on the first network device may be understood as that the terminal device receives system information of a cell of the first network device, completes downlink time-frequency synchronization, and can receive downlink information sent by the first network device.

It should be noted that, for an implementation process of the terminal device in the third aspect, reference may be made to a possible implementation process in the first aspect, with corresponding technical effects achieved. For example, for an implementation process of the first information in the third aspect, reference may be made to the implementation process of the first information in the first aspect. For another example, in the third aspect, the terminal device may further exchange other information (including second information, third information, fourth information, fifth information, sixth information, or the like) with the network device. For an implementation process of the other information, refer to a corresponding implementation process in the first aspect.

A fourth aspect of this application provides a communication apparatus. The apparatus is a terminal device, or the apparatus is some components (for example, a processor, a chip, or a chip system) in the terminal device, or the apparatus may be a logical module or software that can implement all or some functions of the terminal device. In the fourth aspect and possible implementations of the fourth aspect, an example in which the communication apparatus is the terminal device is used for description.

The apparatus includes a processing unit and a transceiver unit. The transceiver unit is configured to receive first information, where the first information indicates an orbital region in which a first network device performs communication. When the processing unit determines that a position of the first network device is located in the orbital region, the transceiver unit is further configured to send second information, where the second information is associated with the first network device.

In a possible implementation of the fourth aspect, the orbital region includes an inter-orbit position interval range.

In a possible implementation of the fourth aspect, the inter-orbit position interval range includes a position interval start point and a position interval end point, and the first information includes an offset of a right ascension of an ascending node of an orbit corresponding to the position interval start point at a reference moment relative to a reference point angle, and/or an offset of a right ascension of an ascending node of the orbit corresponding to the position interval end point at the reference moment relative to the reference point angle.

In a possible implementation of the fourth aspect, the orbital region includes an intra-orbit angle interval range.

In a possible implementation of the fourth aspect, the intra-orbit angle interval includes an angle interval start point and an angle interval end point, and the first information includes an offset of the angle interval start point relative to a reference point, and/or an offset of the angle interval end point relative to the reference point.

In a possible implementation of the fourth aspect, the transceiver unit is further configured to receive third information, where the third information indicates an effectiveness condition of the orbital region; and that the transceiver unit is configured to send the second information when the processing unit determines that the position of the first network device is located in the orbital region includes: The transceiver unit is configured to send the second information when the processing unit determines that the position of the first network device is located in the orbital region and that the effectiveness condition is met.

In a possible implementation of the fourth aspect, when the processing unit determines that the effectiveness condition is not met, the transceiver unit is further configured to send fourth information, where the fourth information is used to request to update the first information.

In a possible implementation of the fourth aspect, the effectiveness condition includes an effective time and/or an effective geographical location.

In a possible implementation of the fourth aspect, that the transceiver unit is configured to send the second information includes: The transceiver unit is configured to send the second information to the first network device, where the second information includes at least one of the following: cell measurement information of the terminal device with respect to the first network device, initial access information for accessing the first network device, handover-related access information for accessing the first network device, and uplink data of the terminal device.

In a possible implementation of the fourth aspect, that the transceiver unit is configured to send the second information includes: The transceiver unit is configured to send the second information to a second network device, where the second information includes at least one of the following: cell measurement information of the terminal device with respect to the first network device, handover-related access information for accessing the first network device, and uplink data of the terminal device.

In a possible implementation of the fourth aspect, the transceiver unit is further configured to receive fifth information, where the fifth information is used to determine the position of the first network device.

In the fourth aspect of this application, modules constituting the communication apparatus may be further configured to perform the steps performed in the possible implementations of the first aspect, and achieve corresponding technical effects. For details, refer to the first aspect. Details are not described herein again.

A fifth aspect of this application provides a communication apparatus. The apparatus is a network device, or the apparatus is some components (for example, a processor, a chip, or a chip system) in the network device, or the apparatus may be a logical module or software that can implement all or some functions of the network device. In the fifth aspect and possible implementations of the fifth aspect, an example in which the communication apparatus is the network device is used for description.

The apparatus includes a processing unit and a transceiver unit. The processing unit is configured to determine first information, where the first information indicates an orbital region in which a first network device performs communication. The transceiver unit is configured to send the first information.

In a possible implementation of the fifth aspect, the orbital region includes an inter-orbit position interval range.

In a possible implementation of the fifth aspect, the inter-orbit position interval range includes a position interval start point and a position interval end point, and the first information includes an offset of a right ascension of an ascending node of an orbit corresponding to the position interval start point at a reference moment relative to a reference point angle, and/or an offset of a right ascension of an ascending node of the orbit corresponding to the position interval end point at the reference moment relative to the reference point angle.

In a possible implementation of the fifth aspect, the orbital region includes an intra-orbit angle interval range.

In a possible implementation of the fifth aspect, the intra-orbit angle interval includes an angle interval start point and an angle interval end point, and the first information includes an offset of the angle interval start point relative to a reference point, and/or an offset of the angle interval end point relative to the reference point.

In a possible implementation of the fifth aspect, when the processing unit determines that the position of the first network device is located in the orbital region, the transceiver unit is further configured to receive second information, where the second information is associated with the first network device.

In a possible implementation of the fifth aspect, the transceiver unit is further configured to send third information, where the third information indicates an effectiveness condition of the orbital region; and that the transceiver unit is configured to receive the second information when the processing unit determines that the position of the first network device is located in the orbital region includes: The transceiver unit is configured to receive the second information when the processing unit determines that the position of the first network device is located in the orbital region and that the effectiveness condition is met.

In a possible implementation of the fifth aspect, the transceiver unit is further configured to receive fourth information, where the fourth information is used to request to update the first information.

In a possible implementation of the fifth aspect, the effectiveness condition includes an effective time and/or an effective geographical location.

In a possible implementation of the fifth aspect, the apparatus is used in the first network device, and the second information includes at least one of the following: cell measurement information of the terminal device with respect to the first network device, initial access information for accessing the first network device, handover-related access information for accessing the first network device, and uplink data of the terminal device.

In a possible implementation of the fifth aspect, the apparatus is used in a second network device, and the second information includes at least one of the following: cell measurement information of the terminal device with respect to the first network device, handover-related access information for accessing the first network device, and uplink data of the terminal device.

In a possible implementation of the fifth aspect, the transceiver unit is further configured to send fifth information, where the fifth information is used to determine the position of the first network device.

In the fifth aspect of this application, modules constituting the communication apparatus may be further configured to perform the steps performed in the possible implementations of the second aspect, and achieve corresponding technical effects. For details, refer to the second aspect. Details are not described herein again.

A sixth aspect of this application provides a communication apparatus. The apparatus is a terminal device, or the apparatus is some components (for example, a processor, a chip, or a chip system) in the terminal device, or the apparatus may be a logical module or software that can implement all or some functions of the terminal device. In the sixth aspect and possible implementations of the sixth aspect, an example in which the communication apparatus is the terminal device is used for description.

The apparatus includes a processing unit and a transceiver unit. The transceiver unit is configured to receive first information, where the first information indicates an orbital region in which a first network device performs communication. When the processing unit determines that a position of the first network device is located in the orbital region, the processing unit determines that the terminal device camps on the first network device.

In the sixth aspect of this application, modules constituting the communication apparatus may be further configured to perform the steps performed in the possible implementations of the third aspect, and achieve corresponding technical effects. For details, refer to the third aspect. Details are not described herein again.

A seventh aspect of this application provides a communication apparatus, including at least one processor. The at least one processor is coupled to a memory; the memory is configured to store a program or instructions; and the at least one processor is configured to execute the program or the instructions, to enable the apparatus to implement the method according to any one of the first aspect or the possible implementations of the first aspect.

An eighth aspect of this application provides a communication apparatus, including at least one processor. The at least one processor is coupled to a memory; the memory is configured to store a program or instructions; and the at least one processor is configured to execute the program or the instructions, to enable the apparatus to implement the method according to any one of the second aspect or the possible implementations of the second aspect.

A ninth aspect of this application provides a communication apparatus, including at least one processor. The at least one processor is coupled to a memory; the memory is configured to store a program or instructions; and the at least one processor is configured to execute the program or the instructions, to enable the apparatus to implement the method according to any one of the third aspect or the possible implementations of the third aspect.

A tenth aspect of embodiments of this application provides a communication apparatus, including at least one logic circuit and an input/output interface. The logic circuit is configured to perform the method according to any one of the first aspect or the possible implementations of the first aspect.

An eleventh aspect of embodiments of this application provides a communication apparatus, including at least one logic circuit and an input/output interface. The logic circuit is configured to perform the method according to any one of the second aspect or the possible implementations of the second aspect.

A twelfth aspect of embodiments of this application provides a communication apparatus, including at least one logic circuit and an input/output interface. The logic circuit is configured to perform the method according to any one of the third aspect or the possible implementations of the third aspect.

A thirteenth aspect of embodiments of this application provides a communication system. The communication system includes the communication apparatus according to the fourth aspect and the communication apparatus according to the fifth aspect; or the communication system includes the communication apparatus according to the fifth aspect and the communication apparatus according to the sixth aspect; or the communication system includes the communication apparatus according to the seventh aspect and the communication apparatus according to the eighth aspect; or the communication system includes the communication apparatus according to the eighth aspect and the communication apparatus according to the ninth aspect; or the communication system includes the communication apparatus according to the tenth aspect and the communication apparatus according to the eleventh aspect; or the communication system includes the communication apparatus according to the eleventh aspect and the communication apparatus according to the twelfth aspect.

A fourteenth aspect of embodiments of this application provides a computer-readable storage medium. The readable storage medium is configured to store one or more computer-executable instructions. When the computer-executable instructions are executed by a processor, the processor performs the method according to any one of the first aspect to the third aspect or the possible implementations thereof.

A fifteenth aspect of embodiments of this application provides a computer program product (or referred to as a computer program). When the computer program product is executed by a processor, the processor performs the method according to any one of the first aspect to the third aspect or the possible implementations thereof.

A sixteenth aspect of embodiments of this application provides a chip system. The chip system includes at least one processor, configured to support a communication apparatus in implementing the method according to any one of the first aspect to the third aspect or the possible implementations thereof.

In a possible design, the chip system may further include a memory. The memory is configured to store program instructions and data that are necessary for the communication apparatus. The chip system may include a chip, or may include a chip and another discrete component. Optionally, the chip system further includes an interface circuit, and the interface circuit provides program instructions and/or data for the at least one processor.

For technical effects brought by any design in the fourth aspect to the sixteenth aspect, refer to technical effects brought by different designs in the first aspect to the third aspect. Details are not described herein again.

### BRIEF DESCRIPTION OF DRAWINGS

FIG. 1 is a diagram of a communication system according to this application;
FIG. 2a is another diagram of a communication system according to this application;
FIG. 2b is another diagram of a communication system according to this application;
FIG. 3a is another diagram of a communication system according to this application;
FIG. 3b is another diagram of a communication system according to this application;
FIG. 4 is another diagram of a communication system according to this application;
FIG. 5 is a diagram of a communication method according to this application;
FIG. 6 is another diagram of a communication scenario according to this application;
FIG. 7 is another diagram of a communication scenario according to this application;
FIG. 8 is another diagram of a communication scenario according to this application;
FIG. 9 is another diagram of a communication method according to this application;
FIG. 10 is a diagram of a communication apparatus according to this application;
FIG. 11 is another diagram of a communication apparatus according to this application;
FIG. 12 is another diagram of a communication apparatus according to this application; and
FIG. 13 is another diagram of a communication apparatus according to this application.

### DESCRIPTION OF EMBODIMENTS

First, some terms in embodiments of this application are explained and described, to facilitate understanding of a person skilled in the art.
(1) Terminal device: may be a wireless terminal device that can receive scheduling and indication information from a network device. The wireless terminal device may be a device providing voice and/or data connectivity for a user, a handheld device having a wireless connection function, or another processing device connected to a wireless modem.
   The terminal device may be various communication kits (communication kit, where the kit may include, for example, an antenna, a power supply kit, a cable, and a Wi-Fi module) having a wireless communication function. The terminal device may alternatively be a communication module having a satellite communication function, a satellite phone or a component thereof, or a very small aperture terminal (very small aperture terminal, VSAT). The terminal device may be a mobile terminal device, for example, a mobile phone (or referred to as a "cellular" phone or a mobile phone (mobile phone)), a computer, or a data card. For example, the terminal device may be a portable, pocket-sized, handheld, computer built-in, or vehicle-mounted mobile apparatus, which exchanges voice and/or data with a radio access network. For example, the wireless terminal device may be a device such as a personal communication service (personal communication service, PCS) phone, a cordless phone, a session initiation protocol (SIP) phone, a wireless local loop (wireless local loop, WLL) station, a personal digital assistant (personal digital assistant, PDA), a tablet computer (Pad), or a computer having a wireless transceiver function. The wireless terminal device may also be referred to as a system, a subscriber unit (subscriber unit), a subscriber station (subscriber station), a mobile station (mobile station, MS), a remote station (remote station), an access point (access point, AP), a remote terminal device (remote terminal), an access terminal device (access terminal), a user terminal device (user terminal), a user agent (user agent), a subscriber station (subscriber station, SS), customer premises equipment (customer premises equipment, CPE), a terminal (terminal), user equipment (user equipment, UE), a mobile terminal (mobile terminal, MT), an uncrewed aerial vehicle, or the like. The terminal device may alternatively be a wearable device and a terminal device in a next-generation communication system, for example, a terminal device in a 6G communication system or a terminal device in a future evolved public land mobile network (public land mobile network, PLMN). Certainly, the terminal device in this application may alternatively be a chip, a modem, a system on a chip (system on a chip, SoC), or a communication platform that may include a radio frequency (radio frequency, RF) part or the like, which is mainly responsible for a related communication function in the device.
(2) Network device: may be a device in a wireless network. For example, the network device may be a radio access network (radio access network, RAN) node (or device), or may be referred to as a base station, through which the terminal device accesses the wireless network. Currently, some examples of the RAN device are: a next-generation base station in a future communication system, a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), a wireless fidelity (wireless fidelity, Wi-Fi) access point (access point, AP), or the like. In addition, in a network structure, the network device may include a central unit (central unit, CU) node, a distributed unit (distributed unit, DU) node, or a RAN device including a CU node and a DU node.

In some implementations, the network device may further include a satellite, an airplane, or an uncrewed aerial vehicle, as well as a ground station device or the like, connected to a satellite, an airplane, or an uncrewed aerial vehicle.

The network device can send configuration information (for example, carried in a scheduling message and/or an indication message) to the terminal device, and the terminal device further performs network configuration based on the configuration information, so that the network configurations of the network device and the terminal device are aligned. Alternatively, a network configuration is preset in the network device and a network configuration is preset in the terminal device, so that the network configurations of the network device and the terminal device are aligned. Specifically, "alignment" means that when there is an interaction message between the network device and the terminal device, the network device and the terminal device have a consistent understanding of a carrier frequency for sending and receiving the interaction message, determining of a type of the interaction message, a meaning of field information carried in the interaction message, or another configuration of the interaction message.

In addition, in another possible case, the network device may be another apparatus providing a wireless communication function for the terminal device. A specific technology and a specific device form that are used by the network device are not limited in embodiments of this application. For ease of description, this is not limited in embodiments of this application.

The network device may further include a core network device. The core network device includes, for example, an access and mobility management function (access and mobility management function, AMF), a user plane function (user plane function, UPF), or a session management function (session management function, SMF).

In embodiments of this application, an apparatus configured to implement a function of the network device may be the network device, or may be an apparatus, for example, a chip system, that can support the network device in implementing the function. The apparatus may be mounted in the network device. In the technical solutions provided in embodiments of this application, an example in which the apparatus configured to implement the function of the network device is a network device is used for describing the technical solutions provided in embodiments of this application.

(3) Configuration and pre-configuration: In this application, both the configuration and the pre-configuration are used. The configuration means that a network device sends configuration information of some parameters or parameter values to a terminal device by using a message or signaling, so that the terminal device determines a communication parameter or a transmission resource based on the values or the information. Similar to the configuration, the pre-configuration may be parameter information or a parameter value negotiated by a network device and a terminal device in advance, or may be parameter information or a parameter value used by a network device or a terminal device as specified in a standard protocol, or may be parameter information or a parameter value prestored in a network device or a terminal device. This is not limited in this application.

Further, these values and parameters may be changed or updated.

(4) Terms "system" and "network" in embodiments of this application may be used interchangeably. "At least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between associated objects. The term "at least one of the following items (pieces)" or an expression similar to the term indicates any combination of these items, including a single item (piece) or any combination of a plurality of items (pieces). For example, "at least one of A, B, and C" includes A, B, C, AB, AC, BC, or ABC. In addition, unless otherwise specified, ordinal numbers such as "first" and "second" in embodiments of this application are used to distinguish between a plurality of objects, and are not used to limit an order, a time sequence, priorities, or importance of the plurality of objects.

(5) "Sending" and "receiving" in embodiments of this application represent signal transmission directions. For example, "sending information to XX" may be understood to mean that a destination of the information is XX, and may include direct sending through an air interface, or include indirect sending through an air interface by another unit or module. "Receiving information from YY" may be understood to mean that a source of the information is YY, and may include direct receiving from YY through an air interface, or may include indirect receiving from YY through an air interface from another unit or module. "Sending" may alternatively be understood as "outputting" at a chip interface, and "receiving" may alternatively be understood as "inputting" at a chip interface.

In other words, sending and receiving may be performed between devices, for example, between a network device and a terminal device; or may be performed inside a device, for example, sending or receiving between components, modules, chips, software modules, or hardware modules inside the device through a bus, a cable, or an interface.

It may be understood that necessary processing, such as coding and modulation, may be performed on the information between the source at which the information is sent and the destination, but the destination may understand valid information from the source. Similar descriptions in this application may be understood similarly, and details are not described again.

(6) In embodiments of this application, "indication" may include a direct indication and an indirect indication, or may include an explicit indication and an implicit indication. Information indicated by a piece of information (for example, the following indication information) is referred to as to-be-indicated information. In a specific implementation process, the to-be-indicated information may be indicated in a plurality of manners, for example, but not limited to, directly indicating the to-be-indicated information, for example, indicating the to-be-indicated information or an index of the to-be-indicated information. Alternatively, the to-be-indicated information may be indirectly indicated by indicating other information. There is an association relationship between the other information and the to-be-indicated information. Alternatively, only a part of the to-be-indicated information may be indicated, and the remaining part of the to-be-indicated information is known or prescribed. For example, specific information may be indicated by using a prescribed (for example, predefined in a protocol) arrangement order of various pieces of information, to reduce indication overheads to some extent. A specific indication manner is not limited in this application. It may be understood that, for a sender of the indication information, the indication information may indicate the to-be-indicated information, and for a receiver of the indication information, the indication information may be used for determining the to-be-indicated information.

In this application, unless otherwise specified, mutual reference may be made between same or similar parts of different embodiments. In embodiments of this application and methods/designs/implementations in embodiments, unless otherwise specified or logic conflicts occur, terms and/or descriptions between different embodiments and between the methods/designs/implementations in embodiments are consistent and may be mutually referenced, and technical features in different embodiments and those in the methods/designs/implementations in embodiments may be combined to form a new embodiment, method, or implementation based on an internal logic relationship thereof. The following implementations of this application are not intended to limit the protection scope of this application.

This application may be applied to a long term evolution (long term evolution, LTE) system, a new radio (new radio, NR) system, or an NR vehicle to everything (NR vehicle to everything, NR V2X) system; or may be applied to a system featuring LTE and 5G hybrid networking; or a device-to-device (device-to-device, D2D) communication system, a machine-to-machine (machine to machine, M2M) communication system, an Internet of Things (Internet of Things, IoT), or an uncrewed aerial vehicle communication system; or a communication system that supports a plurality of wireless technologies, for example, an LTE technology and an NR technology; or a non-terrestrial communication system, for example, a satellite communication system, a high-altitude communication platform, or the like. In addition, optionally, the communication system may also be applicable to a Narrowband Internet of Things (narrowband-internet of things, NB-IoT) system, an enhanced data rate for GSM evolution (enhanced data rate for GSM evolution, EDGE) system, and a wideband code division multiple access (wideband code division multiple access, WCDMA) system, a code division multiple access 2000 (code division multiple access, CDMA2000) system, a time division-synchronous code division multiple access (time division-synchronization code division multiple access, TD-SCDMA) system, and a future-oriented communication technology; or another communication system. The communication system includes a network device and a terminal device. The network device is used as a configuration information sending entity, and the terminal device is used as a configuration information receiving entity. Specifically, in the communication system, an entity sends configuration information to another entity, and sends data to the another entity or receives data sent by the another entity. The another entity receives the configuration information, and sends data to the configuration information sending entity based on the configuration information or receives data sent by the configuration information sending entity. This application may be applied to a terminal device in a connected state or an active (active) state, or may be applied to a terminal device in a non-connected (inactive) state or an idle (idle) state.

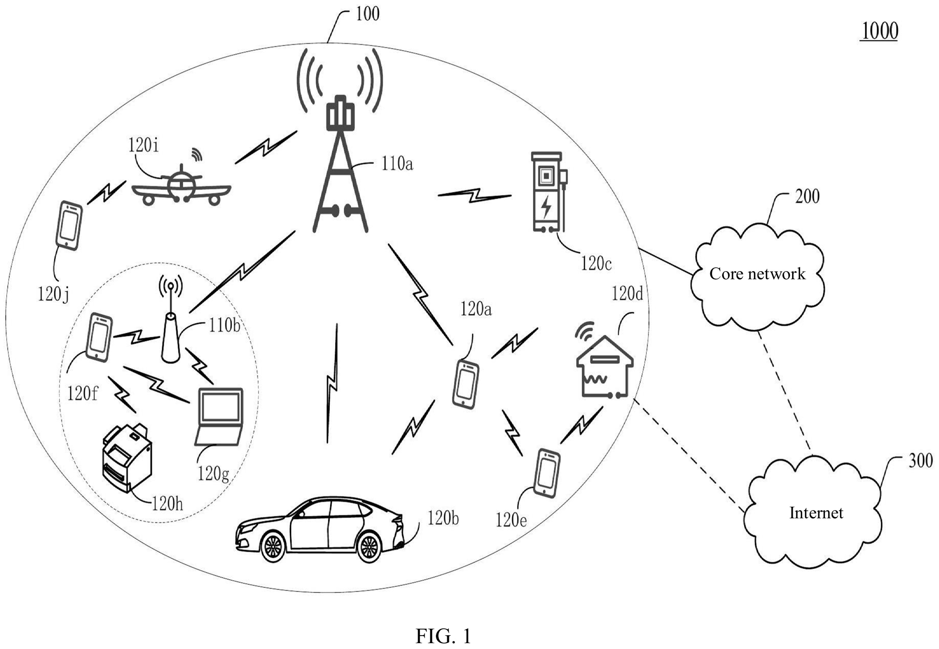

FIG. 1 is a diagram of an architecture of a communication system 1000 to which an embodiment of this application is applied. As shown in FIG. 1, the communication system includes a radio access network (radio access network, RAN) 100 and a core network 200. Optionally, the communication system 1000 may further include an Internet 300. The RAN 100 includes at least one RAN node (for example, 110a and 110b in FIG. 1, collectively referred to as 110), and may further include at least one terminal (for example, 120a to 120j in FIG. 1, collectively referred to as 120). The RAN 100 may further include another RAN node, for example, a wireless relay device and/or a wireless backhaul device (not shown in FIG. 1). The terminal 120 is connected to the RAN node 110 in a wireless manner, and the RAN node 110 is connected to the core network 200 in a wireless or wired manner. A core network device in the core network 200 and the RAN node 110 in the RAN 100 may be different independent physical devices, or may be a same physical device that integrates a logical function of the core network device and a logical function of the RAN node. The terminals may be connected to each other in a wired or wireless manner and the RAN nodes may be connected to each other in a wired or wireless manner.

It should be noted that the technical solutions in embodiments of this application are applicable to a communication system that integrates terrestrial communication and satellite communication. The communication system may also be referred to as a non-terrestrial network (non-terrestrial network, NTN) communication system. The terrestrial communication system may be, for example, a long term evolution (long term evolution, LTE) system, a universal mobile telecommunications system (universal mobile telecommunications system, UMTS), a 5G communication system or a new radio (new radio, NR) system, or a communication system developed in a next phase of a 5G communication system. This is not limited herein.

Compared with a conventional mobile communication system, a satellite communication system has wider coverage, and communication costs of the satellite communication system are independent of a transmission distance. Therefore, the satellite communication system has advantages such as capabilities to overcome natural geographical obstacles, for example, oceans, deserts, and mountains. To overcome disadvantages of a conventional communication network, satellite communication may serve as an effective supplement to the conventional network. It is generally considered that, compared with terrestrial communication, communication in a non-terrestrial communication network (non-terrestrial network, NTN) has different channel characteristics, such as a long transmission delay and a large Doppler frequency offset. For example, a round-trip delay of GEO satellite communication is 238 to 270 milliseconds (ms). A round-trip delay of LEO satellite communication is 8 ms to 20 ms. Based on different orbital altitudes, satellite communication systems may be classified into the following three types: a high earth orbit (geostationary earth orbit, GEO) satellite communication system, also referred to as a geosynchronous orbit satellite system; a medium earth orbit (medium earth orbit, MEO) satellite communication system; and a low earth orbit (low earth orbit, LEO) satellite communication system.

A GEO satellite, generally also referred to as a geostationary orbit satellite, may have an orbital altitude of 35786 kilometers (km). A main advantage of the GEO satellite is that the GEO satellite is geostationary and provides a very large coverage area. However, the GEO satellite has outstanding disadvantages. For example, due to an extremely long distance from the Earth, a large-aperture antenna is required; a transmission delay is relatively long, approximately 0.5s, and cannot meet a requirement of a real-time service; and the GEO satellite has relatively limited orbital resources and high launch costs, and cannot provide coverage for polar regions. An MEO satellite has an orbital altitude of 2000 km to 35786 km. A relatively small quantity of MEO satellites can achieve global coverage. However, the MEO satellite has a longer transmission delay than an LEO satellite and is mainly used for positioning and navigation. In addition, a satellite with an orbital altitude of 300 km to 2000 km is referred to as a low earth orbit (LEO) satellite. Compared with the MEO satellite and the GEO satellite, the LEO satellite has a lower orbital altitude, a shorter data transmission delay, a lower power loss, and lower launch costs. Therefore, an LEO satellite communication network has made great progress in recent years and has attracted attention.

In a possible implementation, operation modes of a satellite may include a transparent (transparent) mode and a regenerative (regenerative) mode.

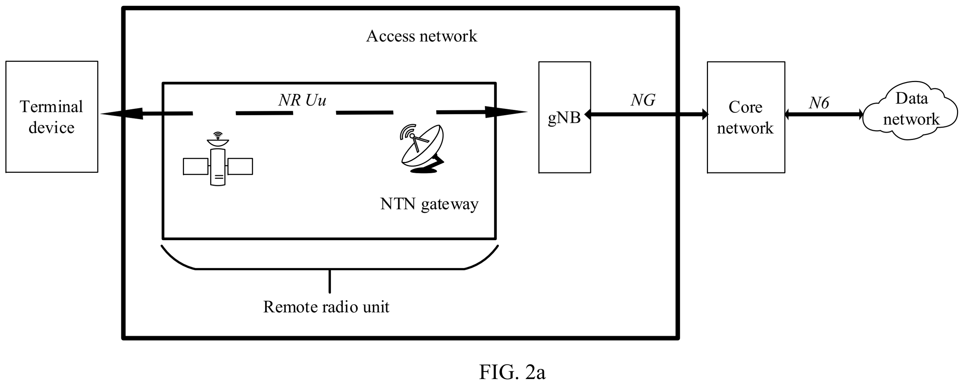

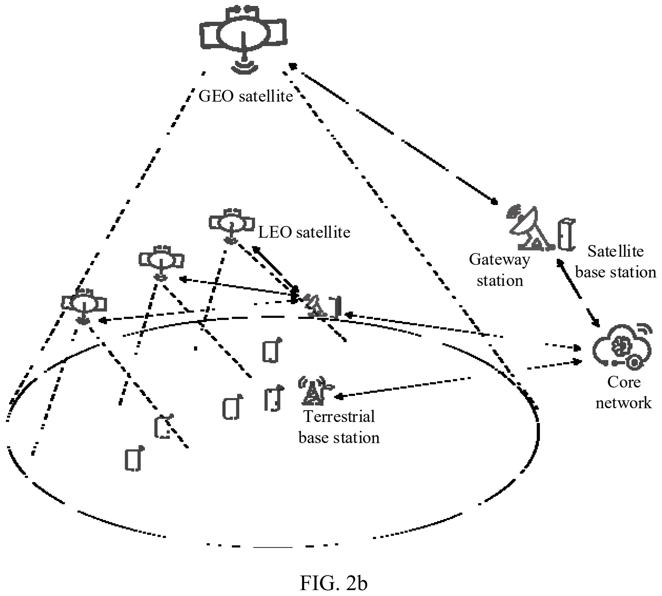

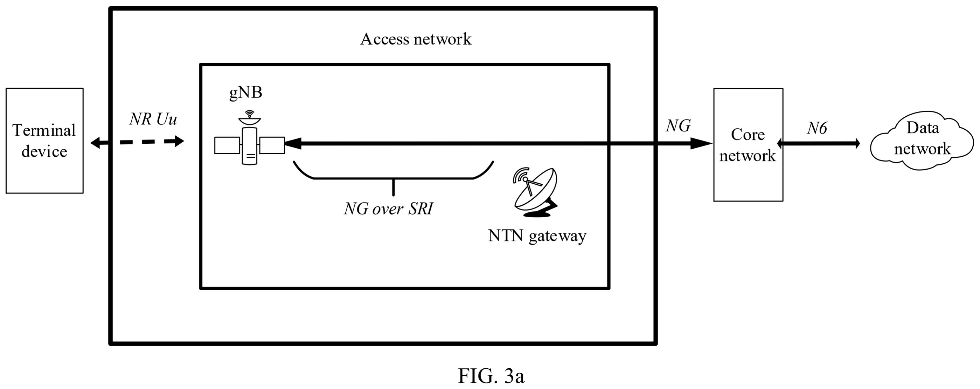

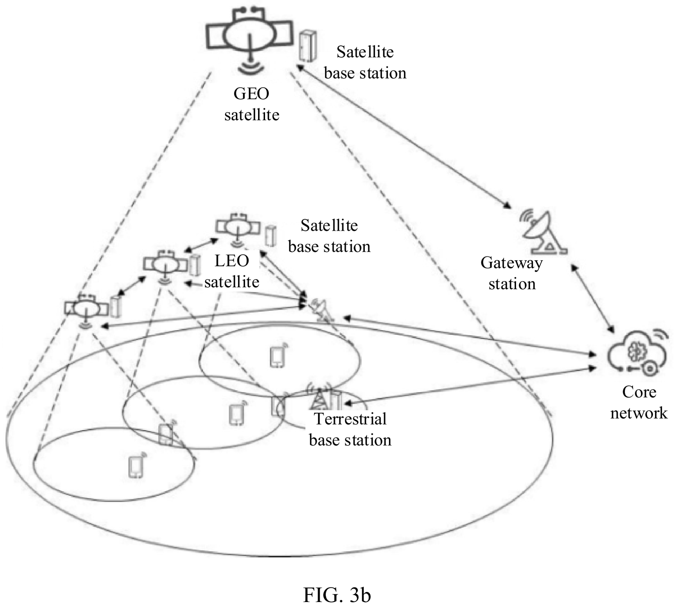

The two modes are described below by using examples with reference to implementations shown in FIG. 2a, FIG. 2b, FIG. 3a, and FIG. 3b.

In an implementation of the transparent mode shown in FIG. 2a, a satellite and a gateway station (that is, an NTN gateway in FIG. 2a) serve as a relay, that is, a remote radio unit (Remote Radio Unit) shown in FIG. 2a, and communication between a terminal device and a gNB needs to be implemented through the relay process. In other words, in transparent mode, the satellite has a relay forwarding function.

For example, in an implementation of the transparent mode shown in FIG. 2b, when a satellite (including a GEO satellite, an MEO satellite, an LEO satellite, or the like) works in transparent mode, the satellite has a relay forwarding function. A gateway station has functions or some functions of a base station. In this case, the gateway station may be considered as a base station. Alternatively, if a base station and a gateway station are separately deployed, a delay of a feeder link includes a delay from the satellite to the gateway station and a delay from the gateway station to the gNB.

Optionally, the transparent mode may be illustrated by using a case in which the gateway station and the gNB are collocated or located close to each other. In a case in which the gateway station is far away from the gNB, the delay of the feeder link may be a sum of the delay from the satellite to the gateway station and the delay from the gateway station to the gNB.

In an implementation of the regenerative mode shown in FIG. 3a, a satellite and a gateway station (that is, an NTN gateway in FIG. 3a) serve as a gNB, and may communicate with a terminal device. In other words, in regenerative mode, the satellite has functions of the base station or some functions of the base station. In this case, the satellite may be considered as the base station.

For example, in an implementation of the regenerative mode shown in FIG. 3b, when a satellite (including a GEO satellite, an MEO satellite, an LEO satellite, or the like) works in regenerative mode, compared with the implementation shown in FIG. 2b, the satellite has functions of a base station or some functions of a base station. In this case, the satellite may be considered as the base station.

It should be noted that the base station of the NTN and the base station of the terrestrial network may be interconnected via a common core network. Alternatively, assistance and interconnection with higher timeliness may be implemented by using an interface defined between base stations. In NR, an interface between base stations is referred to as an Xn interface, and an interface between a base station and a core network is referred to as an NG interface. In a converged network, both an NTN node and a ground node may implement interworking and collaboration through the foregoing interfaces.

In addition, a satellite serving as a network device may send ephemeris (ephemeris) information, so that a receiver (for example, a terminal device, a terrestrial base station, or another satellite) of the ephemeris information can determine information about an operational orbit of the satellite based on the ephemeris information. In an implementation example, the ephemeris information may include one or more pieces of information in the following Table 1. Alternatively, the terminal device may learn about one or more pieces of information in Table 1 through pre-configuration.

**Table 1**

| Orbital element | Symbol | Description | Spatial determinant |
|---|---|---|---|
| Semimajor | a | Semimajor axis (6378.14 km) of the | Determines a shape |
| axis | | Earth plus the orbital altitude. | of the orbit. |
| Eccentricity | e | Equal to 0 for a circular orbit. It can be obtained from TLE parameters. | Determines the shape of the orbit. |
| Orbital inclination | i | Included angle between an orbital plane and an equatorial plane of the Earth. | Determines a spatial orientation of the orbital plane. |
| Right ascension of the ascending node (right ascension of the ascending node) | Ω | Angle (RAAN) at the Earth's center between the ascending node and the vernal equinox, where the ascending node is a point at which the satellite crosses the equator from the Southern Hemisphere to the Northern Hemisphere. | Determines the spatial orientation of the orbital plane. |
| Argument of perigee | ω | Angle at the Earth's center between the perigee and the ascending node. | Determines a position of the orbit within the orbital plane. |
| Time of perigee passage | tₚ | Time at which the satellite is located at the perigee. | Determines an initial position of the satellite on the orbit. |

It should be noted that, in actual application, the last parameter "time of perigee passage" tₚ in Table 1 is usually replaced with "mean anomaly at epoch", and functions thereof are the same, as shown in Table 2.

**Table 2**

| Orbital element | Symbol | Description | Spatial determinant |
|---|---|---|---|
| Semimajor axis | a | Semimajor axis (6378.14 km) of the Earth plus the orbital altitude. | Determines the shape of the orbit. |
| Eccentricity | e | Equal to 0 for a circular orbit. It can be obtained from TLE parameters. | Determines the shape of the orbit. |
| Orbital | i | Included angle between the orbital | Determines the |
| inclination | | plane and the equatorial plane of the Earth. | spatial orientation of the orbital plane. |
| Right ascension of the ascending node (right ascension of the ascending node) | Ω | Angle (RAAN) at the Earth's center between the ascending node and the vernal equinox, where the ascending node is the point at which the satellite crosses the equator from the Southern Hemisphere to the Northern Hemisphere. | Determines the spatial orientation of the orbital plane. |
| Argument of perigee | ω | Angle at the Earth's center between the perigee and the ascending node. | Determines the position of the orbit within the orbital plane. |
| Mean anomaly at epoch | M₀ | Angle swept by a radius vector of the satellite during orbital movement starting from the perigee. | Determines the initial position of the satellite on the orbit. |

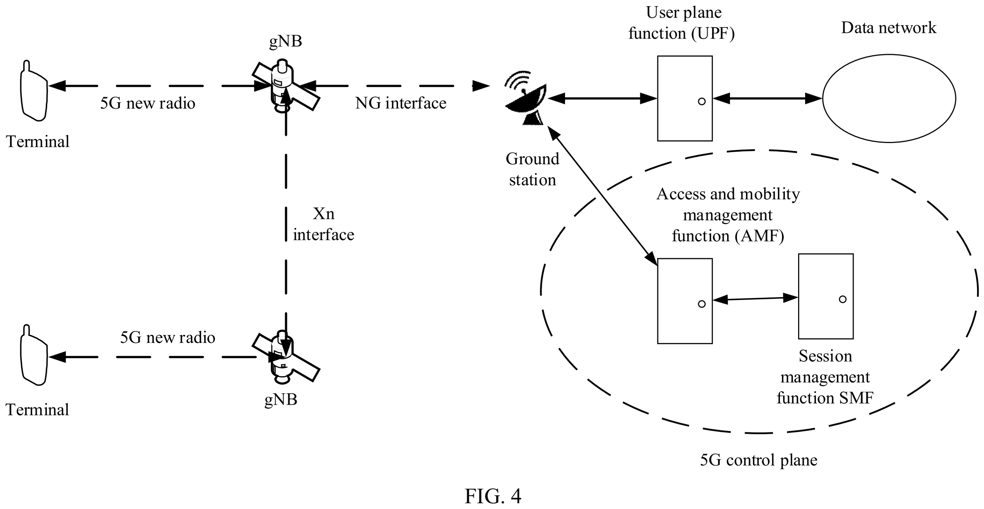

5G is used as an example. An architecture of a 5G satellite communication system is shown in FIG. 4. A terrestrial terminal device accesses a network through 5G new radio. A gNB is deployed on a satellite, and is connected to a terrestrial core network through a radio link. In addition, there is a radio link between satellites, to complete signaling exchange and user data transmission between base stations. Devices and interfaces in FIG. 4 are described as follows:

A 5G core network provides services such as user access control, mobility management, session management, user security authentication, and charging. The 5G core network includes a plurality of functional units, and may be divided into a control plane functional entity and a data plane functional entity. An access and mobility management function (access and mobility management function, AMF) is responsible for user access management, security authentication, and mobility management. A user plane function (user plane function, UPF) is responsible for managing functions such as user plane data transmission and traffic statistics. A session management function (session management function, SMF) is mainly used for session management in a mobile network, for example, session establishment, modification, and release.

A ground station is responsible for forwarding signaling and service data between a satellite base station and the 5G core network.

5G new radio: a radio link between a terminal and a base station.

An Xn interface is an interface between gNBs and is mainly used for signaling interaction, for example, a handover.

An NG interface is an interface between the gNB and the 5G core network, and mainly exchanges non-access stratum (non-access stratum, NAS) signaling or other signaling of the core network, and service data of a user.

A network device in a terrestrial network communication system and a satellite in an NTN communication system may be collectively considered as network devices. An apparatus configured to implement a function of a network device may be the network device, or may be an apparatus, for example, a chip system, that can support the network device in implementing the function. The apparatus may be mounted in the network device. When the technical solutions provided in embodiments of this application are described below, an example in which an apparatus configured to implement a function of a network device is a satellite is used to describe the technical solutions provided in embodiments of this application. It may be understood that, when the method provided in embodiments of this application is applied to the terrestrial network communication system, an action performed by the satellite may be performed by a base station or a network device.

In embodiments of this application, an apparatus configured to implement a function of a terminal device may be the terminal device, or may be an apparatus, for example, a chip system, that can support the terminal device in implementing the function. The apparatus may be mounted in the terminal device. In embodiments of this application, the chip system may include a chip or may include a chip and another discrete component. In the technical solutions provided in embodiments of this application, an example in which an apparatus configured to implement a function of a terminal device is a terminal or UE is used to describe the technical solutions provided in embodiments of this application.

In addition, the satellite may be a geostationary satellite, a non-geostationary satellite, an artificial satellite, a low earth orbit satellite, a medium earth orbit satellite, a high earth orbit satellite, or the like. This is not specifically limited herein in this application.

The foregoing content describes a plurality of wireless communication scenarios in this application. It should be understood that the foregoing content is merely an example for describing scenarios to which this application may be applied. This application may be further applied to other application scenarios. This is not limited herein. The following describes a wireless communication process in this application.

In the communication system shown in FIG. 1, a signal (for example, the signal carries configuration information, configuration signaling, or the like) that can be sent by a network device may be used to configure communication resources. The communication resources may include communication resources of the network device and communication resources of a possible neighboring network device, so that a receiver of the signal can determine a corresponding communication resource based on the signal. For example, when the receiver of the signal is a terminal device, the terminal device can obtain a network service based on the communication resource. Generally, assuming that the network device is a terrestrial base station, the terrestrial base station and another neighboring terrestrial base station are generally fixed at places on the ground, that is, relative positions between different terrestrial base stations are generally unchanged. Therefore, network management personnel may perform network planning in advance, so that communication resources (for example, the communication resources may include time domain resources and frequency domain resources) indicated by different signals sent by different terrestrial base stations for a same communication region can be different, to reduce communication interference for the terminal device in the same communication region.

However, in the communication system shown in FIG. 2a, FIG. 2b, FIG. 3a, FIG. 3b, or FIG. 4, the network device may not be fixed at a place on the ground. For example, the network device may be a device such as a low earth orbit satellite, a medium earth orbit satellite, or a high earth orbit satellite. In this case, because the network device itself moves at a high speed, a position of the network device may change frequently. As a result, communication resources indicated by different signals sent by different network devices for a same communication region may be the same. Consequently, a possibility of communication interference is increased, and communication efficiency is affected.

To resolve the foregoing problem, this application provides a communication method and a related device, to reduce a possibility of communication interference between signals of different network devices, thereby improving communication efficiency. Detailed descriptions are provided below with reference to the accompanying drawings.

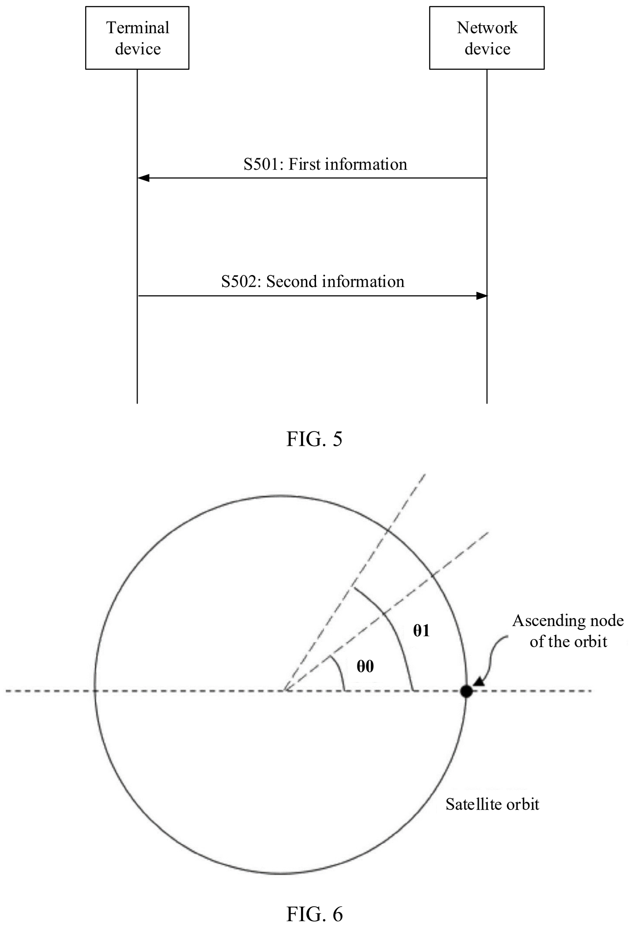

FIG. 5 is a diagram of an implementation of a communication method according to this application. The method includes the following steps.

It should be noted that in FIG. 5, the method is illustrated by using an example in which a terminal device and a network device are execution bodies of the interaction illustration. However, the execution bodies of the interaction illustration are not limited in this application. For example, in FIG. 5 and a corresponding implementation, S501 and S502 are performed by the terminal device, or may be performed by a chip, a chip system, or a processor that supports the terminal device in implementing the method, or may be a logical module or software that can implement all or some functions of the terminal device. In FIG. 5 and the corresponding implementation, the network device in S501 and S502 may alternatively be replaced with a chip, a chip system, or a processor that supports the network device in implementing the method, or may be replaced with a logical module or software that can implement all or some functions of the network device. For example, the terminal device may be UE, a vehicle-mounted device, a chip of the terminal, or a ground station. The network device may be a first network device or a second network device described below. For example, the network device may be a geostationary satellite, a non-geostationary satellite, an artificial satellite, a low earth orbit satellite, a medium earth orbit satellite, or a high earth orbit satellite.

S501: The network device sends first information, and correspondingly, the terminal device receives the first information. The first information indicates an orbital region in which the first network device performs communication.

S502: The terminal device sends second information, and correspondingly, the network device receives the second information. When it is determined that a position of the first network device is located in the orbital region indicated by the first information in step S501, the terminal device sends the second information in step S502, where the second information is associated with the first network device. In other words, for the network device, when the position of the first network device is located in the orbital region indicated by the first information in step S501, the network device may receive the second information.

It should be understood that the orbital region in which the first network device performs communication may be understood as an orbital region in which, when the position of the first network device is located in the orbital region, the first network device has a communication capability. Therefore, the orbital region in which the first network device performs communication may be replaced with an orbital region in which the first network device can perform communication, an orbital region in which the first network device is allowed to perform communication, or the like.

It should be understood that when the first network device is a satellite, an orbit of the satellite may be a closed curve formed by movement of the satellite around the Earth along an approximately circular or elliptical path. Due to rotation of the Earth, an orbit of a satellite sweeps over the Earth to form a curved surface (or an approximately curved surface). An orbital region in which the satellite performs communication may be greater than or equal to the curved surface, and a moving speed of the satellite is generally greater than a moving speed of the terminal device. Therefore, during movement of the satellite, when the curved surface covers the terminal device or a position of the terminal device is located in a region in which the curved surface is projected on the ground, the satellite can communicate with the terminal device or communication quality between the satellite and the terminal device is relatively good. Conversely, when the curved surface does not cover the terminal device or the position of the terminal device is located outside the region in which the curved surface is projected on the ground, the satellite may be unable to communicate with the terminal device or communication quality between the satellite and the terminal device is relatively poor. Correspondingly, in the foregoing technical solution, the orbital region in which the first network device performs communication may be understood as the curved-surface region, or a region in which the curved-surface region is projected on the ground, or a three-dimensional spatial region between the curved-surface region and the projection.

Optionally, at different times, orbital regions in which one or more network devices located on a same orbit perform communication may be the same. In the foregoing technical solution, the first information may indicate the orbital region in which the one or more network devices on the orbit of the first network device perform communication. Therefore, when the terminal device determines that a position of any one of the one or more network devices on the orbit of the first network device is located in the orbital region, the terminal device may determine that the terminal device can communicate with the network device on the orbit of the first network device, and then send, in step S502, the second information associated with the first network device.

Optionally, at different times, orbital regions in which different network devices located on different orbits perform communication may be different. For example, orbital regions in which different network devices located on different orbits perform communication may be completely different (that is, completely non-overlapping), or orbital regions in which different network devices located on different orbits perform communication may partially overlap. Correspondingly, for the terminal device, angle intervals within which different network devices located on different orbits perform communication are different. Therefore, the terminal device can communicate with network devices on different orbits by using different communication angle intervals, and when different network devices on different orbits use a same communication resource, interference can also be reduced.

Optionally, when different network devices can interact or negotiate with each other, these different network devices may be referred to as network devices of a same system. For example, these different network devices may be network devices of a same operator. In addition, when different network devices are not allowed to interact or negotiate with each other, these different network devices may be referred to as network devices of different systems. For example, these different network devices may be network devices of different operators.

In the foregoing technical solution, the network device that sends the first information to the terminal device in step S501 may be the first network device, or may be another network device located in a same system as the first network device, or may be another network device located in a different system from the first network device. This is not limited herein.

Optionally, the first information may be information sent in a broadcast manner. For example, the first information may include a synchronization signal block (synchronization signal/physical broadcast channel block, SS/PBCH block, SS/PBCH block, or SSB) or a system information block (system information block, SIB).

It should be noted that the network device may determine the first information in a plurality of manners before step S501. For example, the network device may determine the first information through pre-configuration. Alternatively, the network device may obtain the first information through configuration by another network device (for example, a core network device or another access network device), or the network device determines the first information based on a detected/sensed signal of another device (for example, a terminal device or a network device) after detecting/sensing the signal of the another device. This is not limited herein.

In an implementation example, the network device may receive sixth information from the terminal device, where the sixth information indicates an inter-orbit position interval range and/or an intra-orbit angle interval range within which the network device performs communication (or can perform communication). Therefore, the network device can use the sixth information sent by the terminal device as one of bases for determining the orbital region indicated by the first information, so that the network device can communicate with the terminal device within an inter-orbit position interval range and/or an intra-orbit angle interval range within which the terminal device expects to perform communication.

In another implementation example, the network device may receive seventh information from another network device, where the seventh information indicates an inter-orbit position interval range and/or an intra-orbit angle interval range within which the network device performs communication (or can perform communication). Therefore, the network device can use the seventh information sent by the another network device as one of the bases for determining the orbital region indicated by the first information, so that the network device can communicate with the terminal device within an inter-orbit position interval range and/or intra-orbit angle interval range within which the another network device expects to perform communication, and mutual interference can be avoided through interaction between different network devices.

In a possible implementation, the first information received by the terminal device in step S501 may indicate the orbital region of the first network device in a plurality of implementations. Descriptions are provided below with reference to some implementation examples.

Implementation 1: In step S501, the orbital region indicated by the first information includes an inter-orbit position interval range.

In the implementation 1, the curved surface formed by the orbital region in which the first network device performs communication may be represented by an inter-orbit position interval in a tangential direction of an orbital movement direction. Correspondingly, the orbital region indicated by the first information may include an inter-orbit position interval range. To be specific, the terminal device may determine, based on the first information, an inter-orbit position interval range within which the first network device performs communication, and the terminal device may subsequently determine, based on the position of the first network device and the inter-orbit position interval range, whether the position of the first network device is located in the orbital region.

In a possible implementation of the implementation 1, the inter-orbit position interval range includes a position interval start point and a position interval end point, and the first information includes an offset of a right ascension of an ascending node of the orbit corresponding to the position interval start point at a reference moment relative to a reference point angle, and/or an offset of a right ascension of an ascending node of the orbit corresponding to the position interval end point at the reference moment relative to the reference point angle. Specifically, when the orbital region includes the inter-orbit position interval range, the first information may include the offset of the right ascension of the ascending node of the orbit corresponding to the position interval start point and/or the right ascension of the ascending node of the orbit corresponding to the position interval end point relative to the reference point angle, so that the terminal device can determine the inter-orbit position interval range of the first network device based on the offset.

It may be understood that the implementation 1 may be applied to a constellation design scenario with a relatively large quantity of orbits. The inter-orbit position interval range indicated by the first information may represent a curved surface in the tangential direction of the orbital movement direction. Therefore, the position interval range can indicate communication ranges of satellites on a plurality of orbits over the curved surface.

For example, the reference point angle may include Greenwich longitude, 180° east longitude or 90° west longitude.

For example, the reference moment may include a current moment, a moment preset duration earlier than the current moment, or a moment preset duration later than the current moment.

Optionally, in the implementation 1, the reference point angle may be a reference point angle preconfigured in a standard or a protocol, or the network device may indicate the reference point angle to the terminal device through configuration. This is not limited herein.

Optionally, in the implementation 1, the first information may alternatively indicate the inter-orbit position interval range in another manner. For example, the first information carries position information (or an index of position information) of the position interval start point and/or the position interval end point. For example, the position information may be indicated by using longitude and latitude coordinates. For another example, the position information may be indicated by using longitude and latitude coordinates and an altitude.

Implementation 2: In step S501, the orbital region indicated by the first information includes an intra-orbit angle interval range.

In the implementation 2, the curved surface formed by the orbital region in which the first network device performs communication may be represented by an intra-orbit angle interval range in the orbital movement direction. Correspondingly, the orbital region indicated by the first information may include an intra-orbit angle interval range. To be specific, the terminal device may determine, based on the first information, an intra-orbit angle interval range within which the first network device performs communication, and the terminal device may subsequently determine, based on the position of the first network device and the intra-orbit angle interval range, whether the position of the first network device is located in the orbital region.

In a possible implementation of the implementation 2, the intra-orbit angle interval includes an angle interval start point and an angle interval end point, and the first information includes an offset of the angle interval start point relative to a reference point, and/or an offset of the angle interval end point relative to the reference point. Specifically, when the orbital region includes the intra-orbit angle interval range, the first information may include the offset of the angle interval start point and/or the angle interval end point relative to the reference point, so that the terminal device can determine an intra-orbit angle interval of the first network device based on the offset.

It may be understood that the implementation 2 may be applied to a constellation design scenario with a relatively large quantity of satellites on an orbit. The intra-orbit angle interval range indicated by the first information may represent a curved surface in the orbital movement direction. Therefore, the angle interval range can indicate communication ranges of different satellites on one orbit over the curved surface.

For example, the reference point may include the ascending node of the orbit, a descending node of the orbit, or a highest latitude position that the orbit passes through.

In an implementation example, as shown in FIG. 6, in the implementation 2, the reference point may be the orbital ascending node of the first network device, and the first information may include the offset (denoted as θ0) of the interval start point relative to the reference point and the offset (denoted as θ1) of the interval end point relative to the reference point. In other words, the terminal device may determine, based on the first information, that the intra-orbit angle interval range indicated by θ0 and θ1 on the satellite orbit of the first network device is the intra-orbit angle interval range within which the first network device performs communication (or can perform communication). In addition, when the terminal device determines that the position of the first network device is within the intra-orbit angle interval range, the terminal device may send, in step S502, the second information associated with the first network device.

Optionally, in the implementation 2, the reference point may be a reference point preconfigured in a standard or a protocol, or the network device may indicate the reference point to the terminal device through configuration. This is not limited herein.

Optionally, in the implementation 2, the first information may alternatively indicate the intra-orbit angle interval range in another manner. For example, the first information carries position information (or an index of position information) of the interval start point and/or the interval end point. For example, the position information may be indicated by using longitude and latitude coordinates and a corresponding timestamp. For another example, the position information may be indicated by using longitude and latitude coordinates and an altitude.

Implementation 3: In step S501, the orbital region indicated by the first information includes an inter-orbit position interval range and an intra-orbit angle interval range.

In the implementation 3, the orbital region indicated by the first information may include both the inter-orbit position interval range and the intra-orbit angle interval range. In other words, the terminal device may determine, based on the first information, the inter-orbit position interval range and the intra-orbit angle interval range within which the first network device performs communication. Subsequently, the terminal device may determine, based on the position of the first network device, the inter-orbit position interval range, and the intra-orbit angle interval range, whether the position of the first network device is located in the orbital region.

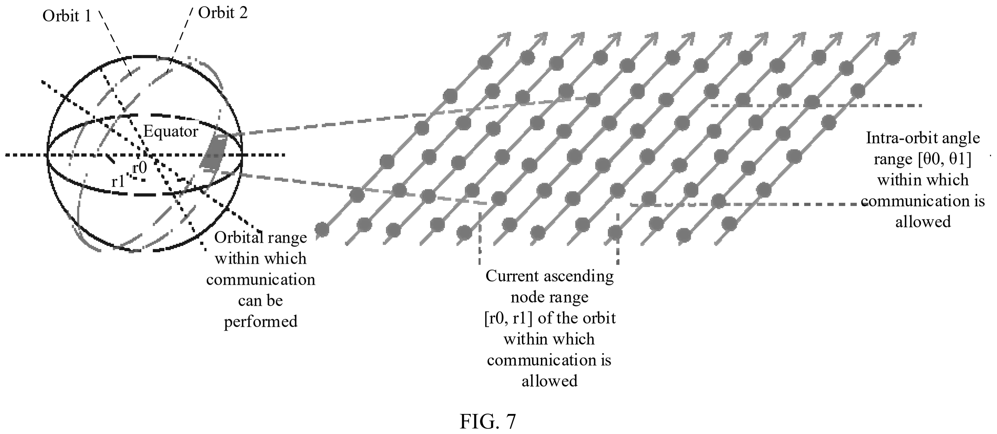

In an implementation example, as shown in an illustration including a plurality of dots on the right side of FIG. 7, a dot represents a position of a satellite at a specific time, dots on a same line are understood as satellites on a same orbit, and dots on different lines are understood as satellites on different orbits. The orbit of the satellite may be a closed curve formed by movement of the satellite around the Earth along an approximately circular or elliptical path. Due to rotation of the Earth, an orbit of a satellite sweeps over the Earth to form a curved surface (or an approximately curved surface) shown by a shaded part in FIG. 7. An orbital region in which the satellite performs communication may be greater than or equal to the curved surface, and a moving speed of the satellite is generally greater than a moving speed of the terminal device. Therefore, during movement of the satellite, when the curved surface covers the terminal device or a position of the terminal device is located in a region in which the curved surface is projected on the ground, the satellite can communicate with the terminal device or communication quality between the satellite and the terminal device is relatively good. Conversely, when the curved surface does not cover the terminal device or the position of the terminal device is located outside the region in which the curved surface is projected on the ground, the satellite may be unable to communicate with the terminal device or communication quality between the satellite and the terminal device is relatively poor. Correspondingly, in the foregoing technical solution, the orbital region in which the first network device performs communication may be understood as the curved-surface region, or a region in which the curved-surface region is projected on the ground, or a three-dimensional spatial region between the curved-surface region and the projection.

In the implementation 1, the orbital region indicated by the first information includes the inter-orbit position interval range (that is, a current ascending node range [r0, r1] of the orbit within which communication is allowed in the figure). For the terminal device, the terminal device may determine, based on the position interval range, an interval within which communication can be performed, of a communication region of the first network device in the tangential direction of the orbital movement direction. In addition, when the terminal device determines that the position of the first network device is within the intra-orbit angle interval range [θ0, θ1], the terminal device may determine, in step S502, whether the position of the first network device is located in the orbital region in which the first network device performs communication.

In the implementation 2, the orbital region indicated by the first information includes the intra-orbit angle interval (that is, an intra-orbit angle range [θ0, θ1] within which communication is allowed in the figure). For the terminal device, the terminal device may determine, based on the angle interval range, an interval within which communication can be performed, of a communication region of the first network device in the orbital movement direction. In addition, when the terminal device determines that the position of the first network device is within the orbital ascending node range [r0, r1], the terminal device may determine, in step S502, that the position of the first network device is located in the orbital region in which the first network device performs communication.

In the implementation 3, the orbital region indicated by the first information includes the inter-orbit position interval range and the intra-orbit angle interval (that is, the current ascending node range [r0, r1] of the orbit within which communication is allowed and the intra-orbit angle range [θ0, θ1] within which communication is allowed in the figure). In other words, for the terminal device, when the terminal device determines that the position of the first network device is within the intra-orbit angle interval range [θ0, θ1] and within the orbital ascending node range [r0, r1], the terminal device may determine, in step S502, that the position of the first network device is located in the orbital region in which the first network device performs communication.

It may be understood that the implementation 3 may be applied to a constellation design scenario with a relatively large quantity of orbits, and/or a constellation design scenario with a relatively large quantity of satellites on an orbit.

It should be noted that, in the implementation 3, for specific implementation of the inter-orbit position interval range, reference may be made to the foregoing description of the implementation 1, and for specific implementation of the intra-orbit angle interval range, reference may be made to the foregoing description of the implementation 2.

In a possible implementation, before step S502, the method may further include: The terminal device receives third information, where the third information indicates an effectiveness condition of the orbital region; and that the terminal device sends the second information when it is determined that the position of the first network device is located in the orbital region includes: The terminal device sends the second information when it is determined that the position of the first network device is located in the orbital region and that the effectiveness condition is met. Specifically, the terminal device may further determine the effectiveness condition of the orbital region based on the received third information, and when it is determined that the position of the first network device is located in the orbital region and that the effectiveness condition is met, the terminal device determines that the terminal device can communicate with the first network device, and then sends the second information associated with the first network device.

Optionally, the third information and the first information are carried in a same message (for example, the first information includes the third information, or the third information includes the first information) or different messages. This is not limited herein.

Optionally, the terminal device may obtain the third information through pre-configuration or predefinition.

In a possible implementation, when it is determined that the effectiveness condition is not met, the method further includes: The terminal device sends fourth information, where the fourth information is used to request to update the first information. Specifically, after the terminal device determines the effectiveness condition of the orbital region based on the received third information, and when the terminal device determines that the effectiveness condition is not met, the terminal device may further send the fourth information used to request to update the first information, so that the network device can subsequently send updated first information based on the request and update, by using the updated first information, the orbital region that is indicated by the first information and in which the first network device performs communication.

Optionally, the effectiveness condition includes an effective time and/or an effective geographical location. The effectiveness condition indicated by the third information may include the effective time and/or the effective geographical location, so that the terminal device can determine, based on the current time and/or a current geographical location, whether the effectiveness condition is met. In addition, when the terminal device determines that the effectiveness condition is met, the terminal device sends the second information associated with the first network device, to increase a possibility that the second information is successfully received by the network device.

In an implementation example, when the effectiveness condition indicated by the third information includes the effective time, the third information may include one or more of an effective start time, effective duration, and an effective end time, or the third information may include an index value corresponding to one or more of an effective start time, effective duration, and an effective end time.

In another implementation example, when the effectiveness condition indicated by the third information includes the effective geographical location, the third information may include one or more of an absolute coordinate value of the geographical location, a relative coordinate value relative to a reference point, and indication information of a region relative to the reference point (for example, when the region is a circular region, the indication information may include a radius or a diameter of the circular region; or when the region is a rectangular region, the indication information may include a side length of the rectangle). Alternatively, the third information may include an index value corresponding to one or more of an absolute coordinate value of the geographical location, a relative coordinate value relative to a reference point, and indication information of a region relative to the reference point.

In a possible implementation, the terminal device may send the second information in step S502 in a plurality of manners. Descriptions are provided below with reference to some implementation examples.

Implementation example 1: In step S502, the terminal device sends the second information to the first network device, where the second information includes at least one of the following: cell measurement information of the terminal device with respect to the first network device, initial access information for accessing the first network device, handover-related access information for accessing the first network device, and uplink data of the terminal device.

In the implementation example 1, when the terminal device determines that the position of the first network device is located in the orbital region, the terminal device may determine that the terminal device can communicate with the first network device, and then the terminal device may send at least one piece of the foregoing information to the first network device, so that the terminal device performs at least one of measurement, initial access, handover-related access, and data transmission with respect to the first network device.

For example, the cell measurement information of the terminal device with respect to the first network device may indicate a result of measuring, by the terminal device, a signal of a cell of the first network device. For example, the signal of the cell may include an SSB or a channel state information reference signal (channel state information reference signal, CSI-RS). The measurement result of the signal of the cell may include a received signal strength indicator (received signal strength indication, RSSI) value, reference signal received power (reference signal received power, RSRP), reference signal received quality (reference signal received quality, RSRQ), or the like.

For example, the initial access information for accessing the first network device may include a random access preamble (random access preamble), a message 1 (message 1, MSG1), or a message A (message A, MSGA).

For example, access information for accessing the first network device in a handover process may include a preamble.

For example, the uplink data of the terminal device may include data or control information sent on a PUSCH or a PUCCH.

Implementation example 2: In step S502, the terminal device sends the second information to the second network device, where the second information includes at least one of the following: cell measurement information of the terminal device with respect to the first network device, handover-related access information for accessing the first network device, and uplink data of the terminal device.

Optionally, the second network device may be a neighboring network device of the first network device, so that the terminal device can implement, by performing the process of sending the second information, at least one of the following processes: measuring the cell of the first network device, initiating handover-related access to the first network device, and initiating data transmission to the first network device.

In the implementation example 2, when the terminal device determines that the position of the first network device is located in the orbital region, the terminal device may determine that the terminal device can communicate with the first network device, and then the terminal device may send at least one piece of the foregoing information to the second network device, so that the terminal device performs at least one of measurement, handover-related access, and data transmission with respect to the first network device.

In a possible implementation, before step S502, the method further includes: The terminal device receives fifth information (for example, ephemeris information), where the fifth information is used to determine the position of the first network device. Specifically, the terminal device may further receive the fifth information, so that the terminal device can determine the position of the first network device based on the fifth information and can subsequently determine, based on the position of the first network device and the orbital region in which the first network device performs communication, whether to communicate with the first network device.

Optionally, the terminal device may determine the position of the first network device through pre-configuration.

Based on FIG. 5 and the related technical solution, the first information received by the terminal device in step S501 indicates the orbital region in which the first network device performs communication. Then, when the terminal device determines that the position of the first network device is located in the orbital region, the terminal device sends, in step S502, the second information associated with the first network device. In other words, after the terminal device determines, based on the received first information, the orbital region in which the network device performs communication, and when it is determined that the position of the network device is located in the orbital region, the terminal device determines that communication with the network device can be initiated. In this way, the orbital region in which the network device performs communication is indicated, so that the terminal device can perform communication when the network device is located in an orbital region in which the network device expects to perform communication. This can prevent the terminal device from performing communication when the network device is located in an orbital region other than the orbital region in which the network device expects to perform communication, and can reduce a possibility of communication interference between signals of different network devices, thereby improving communication efficiency.

In addition, for the terminal device, the orbital region in which the network device performs communication may correspond to an angle interval within which the terminal device performs communication. In other words, the terminal device may determine, by using the orbital region of the network device, an angle interval within which the network device can perform communication (for example, the terminal device may communicate with the network device by using a communication beam (beam) within the angle interval). Correspondingly, in the foregoing technical solution, the orbital region in which the network device performs communication is indicated, so that the terminal device can perform communication based on an expected communication angle interval indicated by the network device.

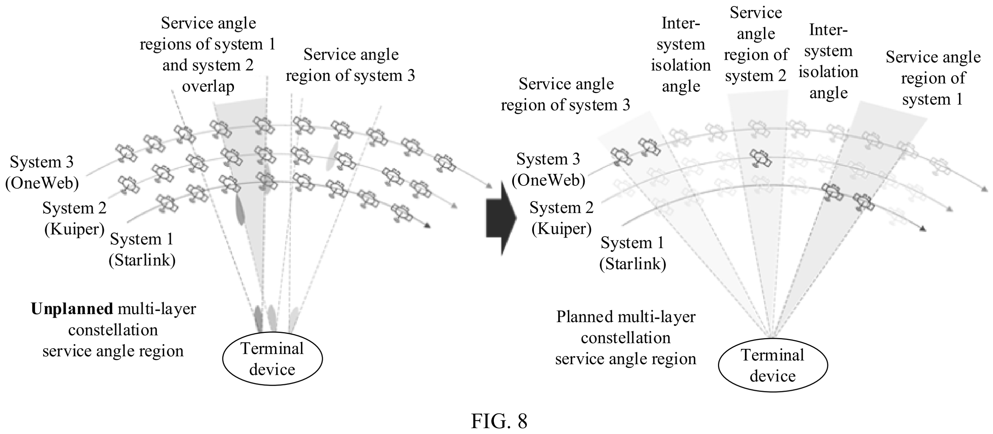

In an application example, the technical solution shown in FIG. 5 may be applied to an application scenario shown in FIG. 8. In FIG. 8, the terminal device may communicate with a plurality of potential satellite systems. For example, the plurality of satellite systems may include a Starlink (Starlink) system (denoted as a system 1), a Kuiper (Kuiper) system (denoted as a system 2), and a OneWeb (OneWeb) system (denoted as a system 3) in the figure.

As shown in FIG. 8, before the technical solution shown in FIG. 5 is applied, communication processes of different systems are illustrated by an unplanned multi-layer constellation angle range on the left of the figure. The three satellite systems may all serve the same region to meet respective requirements for full coverage. If beam pointing of each system is not subject to any constraint, for terminal devices, satellites of different systems in similar angle regions may simultaneously communicate with different terminal devices at a same position. For example, in the figure, when angle ranges of the system 1 and the system 2 overlap, two communication signals interfere with each other. As a constellation scale increases, a quantity of satellite beams increases, and a quantity of terminal devices that simultaneously perform communication also increases. In this case, a probability of occurrence of the foregoing interference increases.

As shown in FIG. 8, after the technical solution shown in FIG. 5 is applied, communication processes of different systems are illustrated by a planned multi-layer constellation angle range on the right of FIG. 8. The first network device may be a network device in one of the three satellite systems. In an implementation in which the first information indicates a communication region of the first network device, an angle at which a satellite in each system can perform communication can be prescribed to some extent. For the terminal device, satellites in each system may perform communication within respective non-overlapping angle ranges, to reduce interference (for example, there is an isolation angle between different angle ranges, which can ensure that a signal of one system enters only a side lobe of a beam of another system).

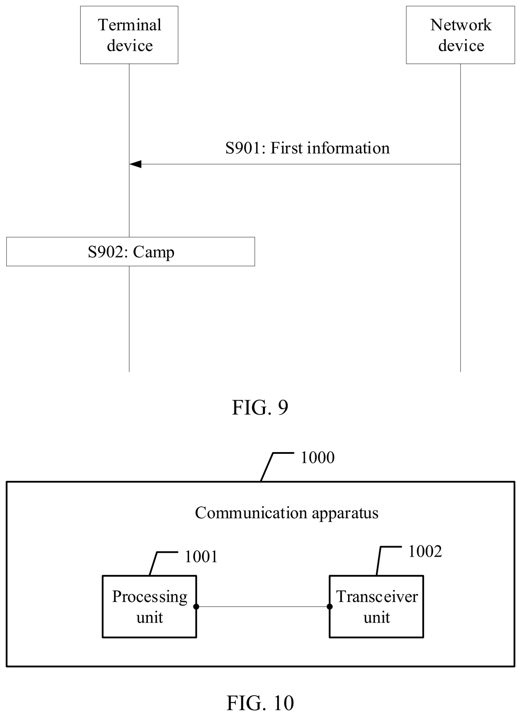

In FIG. 5 and a related implementation, when it is determined that the position of the first network device is located in the orbital region indicated by the first information, the terminal device may determine that the terminal device can communicate with the first network device, and the terminal device sends the second information associated with the first network device, to implement at least one of measurement, initial access, handover-related access, and data transmission. For the terminal device, after the terminal device determines that the terminal device can communicate with the first network device, the terminal device may also perform another communication behavior. Descriptions are provided below by using an example with reference to a manner shown in FIG. 9. As shown in FIG. 9, the following steps are included.

S901: A network device sends first information, and correspondingly, a terminal device receives the first information. The first information indicates an orbital region in which a first network device performs communication.

It should be noted that, for an implementation process of step S901, reference may be made to the implementation process of step S501.

S902: The terminal device camps (camp) on the first network device. When it is determined that a position of the first network device is located in the orbital region indicated by the first information in step S901, the terminal device may camp on the first network device in step S902.

Based on the technical solution shown in FIG. 9, after the terminal device determines, based on the received first information, the orbital region in which the network device performs communication, and when it is determined that the position of the network device is located in the orbital region, the terminal device determines that the terminal device may camp on the first network device and communicate with the network device. In this way, the orbital region in which the network device performs communication is indicated, so that the terminal device can camp on the network device when the network device is located in an orbital region in which the network device expects to perform communication. This can prevent the terminal device from camping on the network device when the network device is located in an orbital region other than the orbital region in which the network device expects to perform communication, and can reduce a possibility of communication interference between signals of different network devices, thereby improving communication efficiency.

It should be noted that, in the implementation shown in FIG. 9, for a related implementation process of each piece of information, reference may be made to the possible implementation process in FIG. 5 and the related embodiment, with corresponding technical effects achieved. For example, in the implementation shown in FIG. 9, for an implementation process of the first information, refer to the implementation process of the first information in FIG. 5 and the related embodiment. For another example, in the implementation shown in FIG. 9, the terminal device may further exchange other information (including second information, third information, fourth information, fifth information, sixth information, or the like) with the network device. For an implementation process of the other information, refer to FIG. 5 and the implementation process of the related embodiment.

Refer to FIG. 10. An embodiment of this application provides a communication apparatus 1000. The communication apparatus 1000 can implement a function of the terminal device (or the network device) in the foregoing method embodiments, and therefore can also achieve beneficial effects of the foregoing method embodiments. In this embodiment of this application, the communication apparatus 1000 may be the terminal device (or the network device), or may be an integrated circuit, an element, or the like inside the terminal device (or the network device), for example, a chip. In the following embodiments, an example in which the communication apparatus 1000 is the terminal device or the network device is used for description.

In a possible implementation, when the apparatus 1000 is configured to perform the method performed by the terminal device in the foregoing embodiments, the apparatus 1000 includes a processing unit 1001 and a transceiver unit 1002. The transceiver unit 1002 is configured to receive first information, where the first information indicates an orbital region in which a first network device performs communication. When the processing unit 1001 determines that a position of the first network device is located in the orbital region, the transceiver unit 1002 is further configured to send second information, where the second information is associated with the first network device.

In a possible implementation, the orbital region includes an inter-orbit position interval range.

In a possible implementation, the inter-orbit position interval range includes a position interval start point and a position interval end point, and the first information includes an offset of a right ascension of an ascending node of an orbit corresponding to the position interval start point at a reference moment relative to a reference point angle, and/or an offset of a right ascension of an ascending node of the orbit corresponding to the position interval end point at the reference moment relative to the reference point angle.

In a possible implementation, the orbital region includes an intra-orbit angle interval range.

In a possible implementation, the intra-orbit angle interval includes an angle interval start point and an angle interval end point, and the first information includes an offset of the angle interval start point relative to a reference point, and/or an offset of the angle interval end point relative to the reference point.

In a possible implementation, the transceiver unit 1002 is further configured to receive third information, where the third information indicates an effectiveness condition of the orbital region; and that the transceiver unit 1002 is configured to send the second information when the processing unit 1001 determines that the position of the first network device is located in the orbital region includes: The transceiver unit 1002 is configured to send the second information when the processing unit 1001 determines that the position of the first network device is located in the orbital region and that the effectiveness condition is met.

In a possible implementation, when the processing unit 1001 determines that the effectiveness condition is not met, the transceiver unit 1002 is further configured to send fourth information, where the fourth information is used to request to update the first information.

In a possible implementation, the effectiveness condition includes an effective time and/or an effective geographical location.

In a possible implementation, that the transceiver unit 1002 is configured to send the second information includes: The transceiver unit 1002 is configured to send the second information to the first network device, where the second information includes at least one of the following: cell measurement information of the terminal device with respect to the first network device, initial access information for accessing the first network device, handover-related access information for accessing the first network device, and uplink data of the terminal device.

In a possible implementation, that the transceiver unit 1002 is configured to send the second information includes: The transceiver unit 1002 is configured to send the second information to a second network device, where the second information includes at least one of the following: cell measurement information of the terminal device with respect to the first network device, handover-related access information for accessing the first network device, and uplink data of the terminal device.

In a possible implementation, the transceiver unit 1002 is further configured to receive fifth information, where the fifth information is used to determine the position of the first network device.

In a possible implementation, when the apparatus 1000 is configured to perform the method performed by the terminal device in the foregoing embodiments, the apparatus 1000 includes a processing unit 1001 and a transceiver unit 1002. The transceiver unit 1002 is configured to receive first information, where the first information indicates an orbital region in which a first network device performs communication. When the processing unit 1001 determines that a position of the first network device is located in the orbital region, the processing unit 1001 determines that the terminal device camps on the first network device.

In a possible implementation, when the apparatus 1000 is configured to perform the method performed by the network device in the foregoing embodiments, the apparatus 1000 includes a processing unit 1001 and a transceiver unit 1002. The processing unit 1001 is configured to determine first information, where the first information indicates an orbital region in which a first network device performs communication. The transceiver unit 1002 is configured to send the first information.

In a possible implementation, the orbital region includes an inter-orbit position interval range.

In a possible implementation, the inter-orbit position interval range includes a position interval start point and a position interval end point, and the first information includes an offset of a right ascension of an ascending node of an orbit corresponding to the position interval start point at a reference moment relative to a reference point angle, and/or an offset of a right ascension of an ascending node of the orbit corresponding to the position interval end point at the reference moment relative to the reference point angle.

In a possible implementation, the orbital region includes an intra-orbit angle interval range.

In a possible implementation, the intra-orbit angle interval includes an angle interval start point and an angle interval end point, and the first information includes an offset of the angle interval start point relative to a reference point, and/or an offset of the angle interval end point relative to the reference point.

In a possible implementation, when the processing unit 1001 determines that the position of the first network device is located in the orbital region, the transceiver unit 1002 is further configured to receive second information, where the second information is associated with the first network device.

In a possible implementation, the transceiver unit 1002 is further configured to send third information, where the third information indicates an effectiveness condition of the orbital region; and that the transceiver unit 1002 is configured to receive the second information when the processing unit 1001 determines that the position of the first network device is located in the orbital region includes: The transceiver unit 1002 is configured to receive the second information when the processing unit 1001 determines that the position of the first network device is located in the orbital region and that the effectiveness condition is met.

In a possible implementation, the transceiver unit 1002 is further configured to receive fourth information, where the fourth information is used to request to update the first information.

In a possible implementation, the effectiveness condition includes an effective time and/or an effective geographical location.

In a possible implementation, the apparatus is used in the first network device, and the second information includes at least one of the following: cell measurement information of the terminal device with respect to the first network device, initial access information for accessing the first network device, handover-related access information for accessing the first network device, and uplink data of the terminal device.

In a possible implementation, the apparatus is used in a second network device, and the second information includes at least one of the following: cell measurement information of the terminal device with respect to the first network device, handover-related access information for accessing the first network device, and uplink data of the terminal device.

In a possible implementation, the transceiver unit 1002 is further configured to send fifth information, where the fifth information is used to determine the position of the first network device.

It should be noted that for details of content such as an information execution process of the unit of the communication apparatus 1000, reference may be made to descriptions in the foregoing method embodiments of this application. Details are not described herein again.

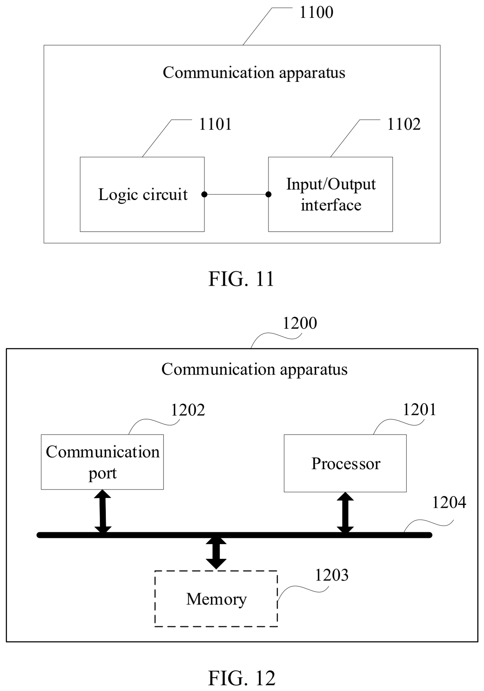

FIG. 11 is another diagram of a structure of a communication apparatus 1100 according to this application. The communication apparatus 1100 includes at least an input/output interface 1102. The communication apparatus 1100 may be a chip or an integrated circuit.

Optionally, the communication apparatus further includes a logic circuit 1101.

The transceiver unit 1002 shown in FIG. 10 may be a communication interface. The communication interface may be the input/output interface 1102 in FIG. 11, and the input/output interface 1102 may include an input interface and an output interface. Alternatively, the communication interface may be a transceiver circuit, and the transceiver circuit may include an input interface circuit and an output interface circuit.

Optionally, the input/output interface 1102 is configured to receive first information, where the first information indicates an orbital region in which a first network device performs communication; and when the logic circuit 1101 determines that a position of the first network device is located in the orbital region, the input/output interface 1102 is further configured to send second information, where the second information is associated with the first network device. The logic circuit 1101 and the input/output interface 1102 may further perform other steps performed by the terminal device in the foregoing embodiments, and achieve corresponding beneficial effects. Details are not described herein again.

Optionally, the logic circuit 1101 is configured to determine first information, where the first information indicates an orbital region in which a first network device performs communication; and the input/output interface 1102 is configured to send the first information. The logic circuit 1101 and the input/output interface 1102 may further perform other steps performed by the network device in the foregoing embodiments, and achieve corresponding beneficial effects. Details are not described herein again.

Optionally, the input/output interface 1102 is configured to receive first information, where the first information indicates an orbital region in which a first network device performs communication; and when the logic circuit 1101 determines that a position of the first network device is located in the orbital region, the logic circuit 1101 determines that a terminal device camps on the first network device. The logic circuit 1101 and the input/output interface 1102 may further perform other steps performed by the terminal device in any one of the foregoing embodiments, and achieve corresponding beneficial effects. Details are not described herein again.

In a possible implementation, the processing unit 1001 shown in FIG. 10 may be the logic circuit 1101 in FIG. 11.

Optionally, the logic circuit 1101 may be a processing apparatus, and some or all functions of the processing apparatus may be implemented by software.

Optionally, the processing apparatus may include a memory and a processor. The memory is configured to store a computer program, and the processor reads and executes the computer program stored in the memory, to perform corresponding processing and/or steps in any method embodiment.

Optionally, the processing apparatus may include only a processor. A memory configured to store a computer program is located outside the processing apparatus, and the processor is connected to the memory through a circuit/wire, to read and execute the computer program stored in the memory. The memory and the processor may be integrated together, or may be physically independent of each other.

Optionally, the processing apparatus may be one or more chips, or one or more integrated circuits. For example, the processing apparatus may be one or more field-programmable gate arrays (field-programmable gate array, FPGA), application-specific integrated circuits (application-specific integrated circuit, ASIC), systems on chips (system on chip, SoC), central processing units (central processing unit, CPU), network processors (network processor, NP), digital signal processors (digital signal processor, DSP), microcontroller units (microcontroller unit, MCU), programmable logic devices (programmable logic device, PLD), or other integrated chips, or any combination of the foregoing chips or processors.

FIG. 12 shows a communication apparatus 1200 in the foregoing embodiments according to an embodiment of this application. The communication apparatus 1200 may be specifically a communication apparatus serving as a terminal device in the foregoing embodiments. In an example shown in FIG. 12, the terminal device is implemented as the terminal device (or a component in the terminal device).

In a possible diagram of a logical structure of the communication apparatus 1200, the communication apparatus 1200 may include but is not limited to at least one processor 1201 and a communication port 1202.

Further optionally, the apparatus may further include at least one of a memory 1203 and a bus 1204. In this embodiment of this application, the at least one processor 1201 is configured to control an action of the communication apparatus 1200.

In addition, the processor 1201 may be a central processing unit, a general-purpose processor, a digital signal processor, an application-specific integrated circuit, a field-programmable gate array or another programmable logic device, a transistor logic device, a hardware component, or any combination thereof. The processor may implement or execute various example logical blocks, modules, and circuits described with reference to content disclosed in this application. Alternatively, the processor may be a combination of processors implementing a computing function, for example, a combination of one or more microprocessors, or a combination of a digital signal processor and a microprocessor. It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

It should be noted that the communication apparatus 1200 shown in FIG. 12 may be specifically configured to implement steps implemented by the terminal device in the foregoing method embodiments, and achieve technical effects corresponding to the terminal device. For a specific implementation of the communication apparatus shown in FIG. 12, refer to the descriptions in the foregoing method embodiments. Details are not described herein again.

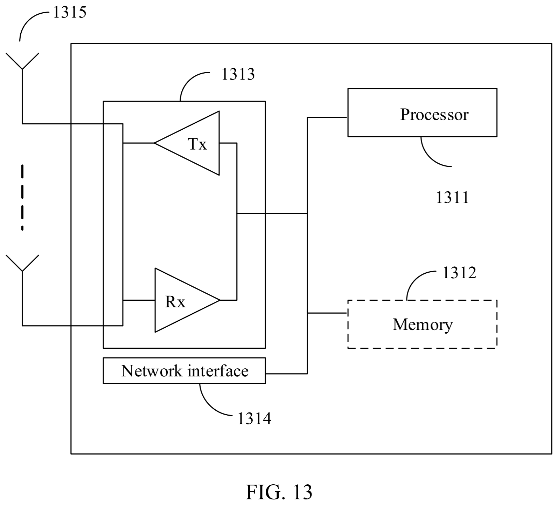

FIG. 13 is a diagram of a structure of a communication apparatus 1300 in the foregoing embodiments according to an embodiment of this application. The communication apparatus 1300 may be specifically a communication apparatus serving as a network device in the foregoing embodiments. In an example shown in FIG. 13, the network device is implemented as the network device (or a component in the network device). For a structure of the communication apparatus, refer to the structure shown in FIG. 13.

The communication apparatus 1300 includes at least one processor 1311 and at least one network interface 1314. Further optionally, the communication apparatus further includes at least one memory 1312, at least one transceiver 1313, and one or more antennas 1315. The processor 1311, the memory 1312, the transceiver 1313, and the network interface 1314 are connected, for example, by using a bus. In this embodiment of this application, the connection may include various interfaces, transmission lines, buses, or the like. This is not limited in this embodiment. The antenna 1315 is connected to the transceiver 1313. The network interface 1314 is configured to enable the communication apparatus to communicate with another communication device through a communication link. For example, the network interface 1314 may include a network interface between the communication apparatus and a core network device, for example, an S1 interface. The network interface may include a network interface between the communication apparatus and another communication apparatus (for example, another network device or a core network device), for example, an X2 interface or an Xn interface.

The processor 1311 is mainly configured to process a communication protocol and communication data, control the entire communication apparatus, execute a software program, and process data of the software program, for example, configured to support the communication apparatus in performing actions described in embodiments. The communication apparatus may include a baseband processor and a central processing unit. The baseband processor is mainly configured to process a communication protocol and communication data. The central processing unit is mainly configured to control an entire terminal device, execute a software program, and process data of the software program. The processor 1311 in FIG. 13 may integrate functions of the baseband processor and the central processing unit. A person skilled in the art may understand that the baseband processor and the central processing unit may alternatively be independent processors, and are interconnected by using a technology such as a bus. A person skilled in the art may understand that the terminal device may include a plurality of baseband processors to adapt to different network standards, and the terminal device may include a plurality of central processing units to enhance processing capabilities of the terminal device, and components of the terminal device may be connected by using various buses. The baseband processor may also be expressed as a baseband processing circuit or a baseband processing chip. The central processing unit may also be expressed as a central processing circuit or a central processing chip. A function of processing the communication protocol and the communication data may be built in the processor, or may be stored in the memory in a form of a software program, and the processor executes the software program to implement a baseband processing function.

The memory is mainly configured to store the software program and data. The memory 1312 may exist independently, and is connected to the processor 1311. Optionally, the memory 1312 may be integrated with the processor 1311, for example, integrated into a chip. The memory 1312 can store program code for executing the technical solutions in embodiments of this application, and the processor 1311 controls the execution. Various types of executed computer program code may also be considered as a driver of the processor 1311.

FIG. 13 shows only one memory and one processor. In an actual terminal device, there may be a plurality of processors and a plurality of memories. The memory may also be referred to as a storage medium, a storage device, or the like. The memory may be a storage element on a same chip as the processor, that is, an on-chip storage element, or may be an independent storage element. This is not limited in this embodiment of this application.

The transceiver 1313 may be configured to support receiving or sending of a radio frequency signal between the communication apparatus and the terminal, and the transceiver 1313 may be connected to the antennas 1315. The transceiver 1313 includes a transmitter Tx and a receiver Rx. Specifically, the one or more antennas 1315 may receive a radio frequency signal. The receiver Rx of the transceiver 1313 is configured to receive the radio frequency signal from the antenna, convert the radio frequency signal into a digital baseband signal or a digital intermediate frequency signal, and provide the digital baseband signal or the digital intermediate frequency signal for the processor 1311, so that the processor 1311 further processes the digital baseband signal or the digital intermediate frequency signal, for example, performs demodulation processing and decoding processing. In addition, the transmitter Tx of the transceiver 1313 is further configured to receive a modulated digital baseband signal or a modulated digital intermediate frequency signal from the processor 1311, convert the modulated digital baseband signal or digital intermediate frequency signal into a radio frequency signal, and send the radio frequency signal through the one or more antennas 1315. Specifically, the receiver Rx may selectively perform one-level or multi-level down frequency mixing processing and analog-to-digital conversion processing on the radio frequency signal, to obtain the digital baseband signal or the digital intermediate frequency signal. An order of the down frequency mixing processing and the analog-to-digital conversion processing is adjustable. The transmitter Tx may selectively perform one-level or multi-level up frequency mixing processing and digital-to-analog conversion on the modulated digital baseband signal or digital intermediate frequency signal, to obtain the radio frequency signal. An order of the up frequency mixing processing and the digital-to-analog conversion is adjustable. The digital baseband signal and the digital intermediate frequency signal may be collectively referred to as digital signals.

The transceiver 1313 may also be referred to as a transceiver unit, a transceiver machine, a transceiver apparatus, or the like. Optionally, a component that is in the transceiver unit and that is configured to implement a receiving function may be considered as a receiving unit, and a component that is in the transceiver unit and that is configured to implement a sending function may be considered as a sending unit. In other words, the transceiver unit includes the receiving unit and the sending unit. The receiving unit may also be referred to as a receiver machine, an input interface, a receiver circuit, or the like. The sending unit may be referred to as a transmitter machine, a transmitter, a transmitter circuit, or the like.

It should be noted that the communication apparatus 1300 shown in FIG. 13 may be specifically configured to implement steps implemented by the network device in the foregoing method embodiments, and achieve technical effects corresponding to the network device. For a specific implementation of the communication apparatus 1300 shown in FIG. 13, refer to the descriptions in the foregoing method embodiments. Details are not described herein again.

An embodiment of this application further provides a computer-readable storage medium configured to store one or more computer-executable instructions. When the computer-executable instructions are executed by a processor, the processor performs the method in the possible implementations of the communication apparatus (for example, the terminal device or the network device) in the foregoing embodiments.

An embodiment of this application further provides a computer program product (or referred to as a computer program). When the computer program product is executed by a processor, the processor performs the method in the possible implementations of the communication apparatus (for example, the terminal device or the network device).

An embodiment of this application further provides a chip system. The chip system includes at least one processor, configured to support a communication apparatus in implementing a function in the possible implementations of the communication apparatus. Optionally, the chip system further includes an interface circuit, and the interface circuit provides program instructions and/or data for the at least one processor. In a possible design, the chip system may further include a memory. The memory is configured to store program instructions and data that are necessary for the communication apparatus. The chip system may include a chip, or may include a chip and another discrete component. The communication apparatus may be specifically the terminal device or the network device in the foregoing method embodiments.

An embodiment of this application further provides a communication system. The communication system includes the terminal device and the network device in any one of the foregoing embodiments.

In the several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, and may be located in one position, or may be distributed on a plurality of network units. Some or all of the units may be selected based on actual requirements to achieve the objectives of the solutions in embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit. When the integrated unit is implemented in the form of the software functional unit and sold or used as an independent product, the integrated unit may be stored in a computer-readable storage medium. Based on such an understanding, the technical solutions of this application essentially, or the part making a contribution, or all or a part of the technical solutions may be implemented in a form of a software product. The computer software product is stored in a storage medium and includes several instructions for instructing a computer device (which may be a personal computer, a server, a network device, or the like) to perform all or a part of the steps of the methods described in embodiments of this application. The storage medium includes any medium that can store program code, such as a USB flash drive, a removable hard disk, a read-only memory (ROM, Read-Only Memory), a random access memory (RAM, Random Access Memory), a magnetic disk, or an optical disc.

## Claims

1. A communication method, comprising:
receiving first information, wherein the first information indicates an orbital region in which a first network device performs communication; and
when it is determined that a position of the first network device is located in the orbital region, sending second information, wherein the second information is associated with the first network device.

2. The method according to claim 1, wherein the orbital region comprises an inter-orbit position interval range.

3. The method according to claim 2, wherein the inter-orbit position interval range comprises a position interval start point and a position interval end point, and the first information comprises an offset of a right ascension of an ascending node of an orbit corresponding to the position interval start point at a reference moment relative to a reference point angle, and/or an offset of a right ascension of an ascending node of the orbit corresponding to the position interval end point at the reference moment relative to the reference point angle.

4. The method according to any one of claims 1 to 3, wherein the orbital region comprises an intra-orbit angle interval range.

5. The method according to claim 4, wherein the intra-orbit angle interval comprises an angle interval start point and an angle interval end point, and the first information comprises an offset of the angle interval start point relative to a reference point, and/or an offset of the angle interval end point relative to the reference point.

6. The method according to any one of claims 1 to 5, wherein the method further comprises:
receiving third information, wherein the third information indicates an effectiveness condition of the orbital region.

7. The method according to any one of claims 1 to 6, wherein sending the second information when it is determined that the position of the first network device is located in the orbital region comprises:
sending the second information when it is determined that the position of the first network device is located in the orbital region and that the effectiveness condition is met.

8. The method according to claim 7, wherein when it is determined that the effectiveness condition is not met, the method further comprises:
sending fourth information, wherein the fourth information is used to request to update the first information.

9. The method according to any one of claims 6 to 8, wherein the effectiveness condition comprises an effective time and/or an effective geographical location.

10. The method according to any one of claims 1 to 9, wherein sending the second information comprises:
sending the second information to the first network device, wherein the second information comprises at least one of the following:
cell measurement information of a terminal device with respect to the first network device, initial access information for accessing the first network device, handover-related access information for accessing the first network device, and uplink data of the terminal device.

11. The method according to any one of claims 1 to 10, wherein sending the second information comprises:
sending the second information to a second network device, wherein the second information comprises at least one of the following:
cell measurement information of a terminal device with respect to the first network device, handover-related access information for accessing the first network device, and uplink data of the terminal device.

12. The method according to any one of claims 1 to 11, wherein the method further comprises:
receiving fifth information, wherein the fifth information is used to determine the position of the first network device.

13. A communication method, comprising:
determining first information, wherein the first information indicates an orbital region in which a first network device performs communication; and
sending the first information to a terminal device.

14. The method according to claim 13, wherein the orbital region comprises an inter-orbit position interval range.

15. The method according to claim 14, wherein the inter-orbit position interval range comprises a position interval start point and a position interval end point, and the first information comprises an offset of a right ascension of an ascending node of an orbit corresponding to the position interval start point at a reference moment relative to a reference point angle, and/or an offset of a right ascension of an ascending node of the orbit corresponding to the position interval end point at the reference moment relative to the reference point angle.

16. The method according to any one of claims 13 to 15, wherein the orbital region comprises an intra-orbit angle interval range.

17. The method according to claim 16, wherein the intra-orbit angle interval comprises an angle interval start point and an angle interval end point, and the first information comprises an offset of the angle interval start point relative to a reference point, and/or an offset of the angle interval end point relative to the reference point.

18. The method according to any one of claims 13 to 17, wherein the method further comprises:
when it is determined that a position of the first network device is located in the orbital region, receiving second information, wherein the second information is associated with the first network device.

19. The method according to claim 18, wherein receiving the second information when it is determined that the position of the first network device is located in the orbital region comprises:
receiving the second information when it is determined that the position of the first network device is located in the orbital region and that an effectiveness condition is met.

20. The method according to any one of claims 13 to 19, wherein when it is determined that the effectiveness condition is not met, the method further comprises:
receiving fourth information, wherein the fourth information is used to request to update the first information.

21. The method according to claim 19 or 20, wherein the effectiveness condition comprises an effective time and/or an effective geographical location.

22. The method according to any one of claims 13 to 21, wherein the method further comprises:
sending third information, wherein the third information indicates an effectiveness condition of the orbital region.

23. The method according to any one of claims 18 to 22, wherein the method is applied to the first network device, and the second information comprises at least one of the following:
cell measurement information of the terminal device with respect to the first network device, initial access information for accessing the first network device, handover-related access information for accessing the first network device, and uplink data of the terminal device.

24. The method according to any one of claims 18 to 22, wherein the method is applied to a second network device, and the second information comprises at least one of the following:
cell measurement information of the terminal device with respect to the first network device, handover-related access information for accessing the first network device, and uplink data of the terminal device.

25. The method according to any one of claims 13 to 24, wherein the method further comprises:
sending fifth information, wherein the fifth information is used to determine the position of the first network device.

26. A communication apparatus, comprising a processing unit and a transceiver unit, wherein the processing unit and the transceiver unit are configured to perform the method according to any one of claims 1 to 12.

27. A communication apparatus, comprising a processing unit and a transceiver unit, wherein the processing unit and the transceiver unit are configured to perform the method according to any one of claims 13 to 25.

28. A communication apparatus, comprising at least one processor, wherein the at least one processor is configured to execute the program or instructions, so that the apparatus implements the method according to any one of claims 1 to 12.

29. A communication apparatus, comprising at least one processor, wherein the at least one processor is configured to execute the program or instructions, so that the apparatus implements the method according to any one of claims 13 to 25.

30. A communication system, wherein the communication system comprises the communication apparatus according to claim 26 and the communication apparatus according to claim 27, or the communication system comprises the communication apparatus according to claim 28 and the communication apparatus according to claim 29.

31. A computer-readable storage medium, wherein the medium stores instructions, and when the instructions are executed by a computer, the method according to any one of claims 1 to 25 is implemented.
